# EUROPÄISCHE PATENTSCHRIFT

(11) **EP 2 415 106 B1**
(45) Veröffentlichungstag und Bekanntmachung des Hinweises auf die Patenterteilung: **20.08.2014**
(21) Anmeldenummer: 10712435.6
(22) Anmeldetag: 01.04.2010
(51) Int. Cl.: H01M 4/48, H01M 4/587, H01M 4/131, H01M 4/133, H01M 4/1391, H01M 4/1393, H01M 4/38, H01M 4/36, H01M 4/485, H01M 10/0525

(54) **ELEKTROAKTIVES MATERIAL UND SEINE VERWENDUNG IN ANODEN FÜR LITHIUMIONEN-ZELLEN**
ELECTROACTIVE MATERIAL AND ITS USE IN ANODES FOR LITHIUM-ION CELLS
MATERIAU ELECTROACTIF ET SON UTILISATION AU SEIN D'ANODES POUR CELLULES AUX IONS LITHIUM

(30) Priorität: 03.04.2009 EP 09157333
(43) Veröffentlichungstag der Anmeldung: 08.02.2012
(73) Patentinhaber: BASF SE, 67056 Ludwigshafen (DE)
(72) Erfinder: KÖNIG, Hannah Maria, 68161 Mannheim (DE); BRAMNIK, Kirill, Jersey City NJ 07310 (US); LANGE, Arno, 67098 Bad Dürkheim (DE); HANEFELD, Phillip, Cranford NJ 07016 (US)
(86) Internationale Anmeldenummer: PCT/EP2010/054403
(87) Internationale Veröffentlichungsnummer: WO 2010/112580

(56) Entgegenhaltungen:
- EP-A1- 0 692 833
- EP-A1- 1 032 062
- EP-A1- 1 657 768
- US-B1- 7 094 499
- J.Y. LEE ET AL.: "Dispersion of Sn and SnO on carbon anodes" JOURNAL OF POWER SOURCES, Bd. 90, Nr. 1, 1. September 2000 (2000-09-01), Seiten 70-75, XP004209916 ISSN: 0378-7753
- H. TAMAI ET AL.: "Preparation of carbons from pitch containing polysilane and their anode properties for lithium-ion batteries" JOURNAL OF MATERIALS SCIENCE LETTERS, Bd. 19, Nr. 1, 1. Januar 2000 (2000-01-01) , Seiten 53-56, XP007913474 ISSN: 0261-8028 in der Anmeldung erwähnt

## Beschreibung

Die vorliegende Erfindung betrifft ein neues elektroaktives Material, welches eine graphitische Kohlenstoffphase C und eine (Halb-)Metall-Phase und/oder eine (Halbmetall-)Oxid-Phase (MOₓ-Phase) umfasst, sowie die Verwendung des elektroaktiven Materials in Anoden für Lithiumionen-Zellen. Die Erfindung betrifft auch ein Verfahren zur Herstellung derartiger Materialien.

In einer zunehmend mobilen Gesellschaft spielen mobile elektrische Geräte eine immer größere Rolle. Seit vielen Jahren finden daher Batterien, insbesondere wiederaufladbare Batterien (so genannte Sekundärbatterien oder Akkumulatoren) Einsatz in nahezu allen Lebensbereichen. An Sekundärbatterien wird heute ein komplexes Anforderungsprofil hinsichtlich ihrer elektrischen und mechanischen Eigenschaften gestellt. So verlangt die Elektronikindustrie nach neuen, kleinen, leichtgewichtigen Sekundärzellen bzw. -batterien mit hoher Kapazität und einer hohen Zyklenstabilität zur Erzielung einer langen Lebensdauer. Weiterhin sollten die Temperaturempfindlichkeit sowie die Selbstentladungsrate gering sein, um eine hohe Zuverlässigkeit und Effizienz zu gewährleisten. Gleichzeitig wird ein hohes Maß an Sicherheit bei der Benutzung gefordert. Lithiumionen-Sekundärbatterien mit diesen Eigenschaften sind insbesondere auch für den Automobilsektor von Interesse und können beispielsweise in Zukunft als Stromspeicher in elektrisch betriebenen Fahrzeugen oder Hybridfahrzeugen eingesetzt werden. Zusätzlich werden hier Batterien gefordert, die vorteilhafte elektrokinetische Eigenschaften aufweisen, um hohe Stromdichten realisieren zu können. Bei der Entwicklung neuartiger Batteriesysteme ist es außerdem von besonderem Interesse, wiederaufladbare Batterien auf kostengünstige Weise herstellen zu können. Auch Umweltaspekte spielen bei der Entwicklung von neuen Batteriesystemen eine wachsende Rolle.

Die Anode einer modernen Hochenergie-Lithiumbatterie besteht heute typischerweise aus Graphit, aber sie kann auch auf metallischem Lithium, einer Lithiumlegierung oder Lithium-Metalloxiden basieren. Für den Aufbau der Kathode einer modernen Lithiumbatterie hat sich in den letzten Jahren die Verwendung von Lithium-Cobalt-Oxiden bewährt. Die beiden Elektroden werden in einer Lithiumbatterie unter Verwendung eines flüssigen oder auch festen Elektrolyts miteinander verbunden. Bei der (Wiederauf-) Ladung einer Lithiumbatterie wird das Kathodenmaterial oxidiert (z.B. gemäß der folgenden Gleichung: LiCoO₂ → n Li⁺ + Li(₁₋ₙ)CoO₂ + n e⁻). Hierdurch wird das Lithium aus dem Kathodenmaterial freigesetzt und wandert in Form von Lithiumionen zur Anode, wo die Lithiumionen unter Reduktion des Anodenmaterials gebunden, im Falle des Graphits als Lithiumionen unter Reduktion des Graphits intercaliert werden. Dabei besetzt das Lithium die Zwischenschichtplätze in der Graphitstruktur: Bei der Entladung der Batterie das in der Anode gebundene Lithium aus der Anode in Form von Lithiumionen herausgelöst und es findet eine Oxidation des Anodenmaterials statt. Die Lithiumionen wandern durch den Elektrolyten zur Kathode und werden dort unter Reduktion des Kathodenmaterials gebunden. Sowohl bei der Entladung der Batterie wie auch bei der Wiederaufladung der Batterie wandern die Lithiumionen durch den Separator.

Ein wesentlicher Nachteil beim Einsatz von Graphit in Li-Ionen-Batterien liegt jedoch in der vergleichesweise geringen spezifischen Kapazität mit einer theoretischen Obergrenze von 0,372 Ah/g. Ähnliche Eigenschaften weisen auch von Graphit verschiedene graphit-ähnliche Kohlenstoffmaterialen auf, beispielsweise Ruß, wie Acetylenschwarz, Lampenruß, Furnace-Ruß, Flamm-Ruß, Spalt-Ruß, Kanal-Ruß oder Thermal-Ruß, sowie Glanzkohlenstoff oder Hartkohlenstoff. Zudem sind derartige Anodenmaterialien hinsichtlich ihrer Sicherheit nicht unproblematisch.

Höhere spezifische Kapazitäten können bei Verwendung von Lithium-Legierungen wie beispielsweise LiₓSi-, LiₓPb-, LiₓSn-, LiₓAl- oder LiₓSb-Legierungen, erreicht werden. Dabei sind Ladungskapazitäten bis hin zum 10-fachen der Ladungskapazität von Graphit möglich (LiₓSi-legierung, Siehe R.A. Huggins, Proceedings of the Electrochemical society 87-1, 1987, S. 356-64). Ein wesentlicher Nachteil derartiger Legierungen ist ihre Dimensionsänderung beim Laden/Entladen, was zu einer Desintragion des Anodenmaterials führt. Als Folge der daraus resultierenden Erhöhung der spezifischen Oberfläche des Anodenmaterials resultieren Kapazitätsverluste durch irreversible Reaktion des Anodenmaterials mit dem Elektrolyten und eine erhöhte Empfindlichkeit der Zelle gegenüber thermischer Belastung, was im Extremfall zu einer stark exothermen Zerstörung der Zelle führen kann und ein Sicherheitsrisiko ist.

Die Verwendung von Lithium als Elektrodenmaterial ist aus sicherheitstechnischen Gründen problematisch. Insbesondere kommt es bei der Abscheidung von Lithium beim Ladungsvorgang zur Bildung von Lithiumdendriten auf dem Anodenmaterial. Diese können zu einem Kurzschlusss in der Zelle führen und dadurch eine unkontrollierte Zerstörung der Zelle bewirken.

Die EP 692 833 beschreibt eine kohlenstoffhaltige Insertionsverbindung, die neben Kohlenstoff ein Metall oder Halbmetall enthält, welches mit Lithium Legierungen bildet, speziell Silizium. Die Herstellung erfolgt durch Pyrolyse von Polymeren, die das Metall oder Halbmetall und Kohlenwasserstoffgruppen enthalten, z.B. im Falle siliziumhaltiger Einlagerungsverbindungen durch Pyrolyse von Polysiloxanen. Die Pyrolyse erfordert drastische Bedingungen, unter denen zunächst die Primärpolymere zersetzt und anschließend Kohlenstoff- und (Halb-)Metall- und/oder (Halb-)Metalloxid-Domänen gebildet werden. Die Herstellung derartige Materialien führt in der Regel zu schlecht reproduzierbaren Qualitäten, vermutlich, weil aufgrund des hohen Energieeintrag die Domänenstruktur nicht oder nur schlecht zu steuern ist.

H. Tamai et al, J. Materials Science Letters, 19 (2000) S. 53-56 schlagen als Anodenmaterial für Li-Ionen-Batterien mit Silizium dotierte kohlenstoffhaltige Materialien vor, die durch Pyrolyse von Pech in Gegenwart von Polysiloxanen erhalten werden. Diese Materialien weisen aus den zuvor genannten Gründen vergleichbare Nachteile wie die aus der EP 692 833 bekannten Materialien auf.

Die US 2002/0164479 beschreibt ein partikelförmiges kohlenstoffhaltiges Material als Anodenmaterial für Li-Ionen-Sekundärzellen, wobei die Partikel des kohlenstoffhaltigen Materials aus Graphit-Partikeln bestehen, auf deren Oberfläche mehrere "Komplex-Partikel" angeordnet und von einer amorphen Kohlenstoffschicht umhüllt sind. Die Komplex-Partikel sind ihrerseits aus einer partikelförmigen, kristallinen Siliziumphase, darauf angeordneten Partikeln aus leitfähigem Kohlenstoff und einer Kohlenstoffumhüllung aufgebaut. Die Komplexpartikel weisen Teilchengrößen im Bereich von 50 nm bis 2 µm und die Graphitpartikel Teilchengrößen im Bereich von 2 bis 70 µm auf. Zur Herstellung der Materialien werden zunächst durch Karbonisierung einer Mischung aus Phenolharz, Silizium-Partikeln und leitfähigem Ruß Komplex-Partikel hergestellt, die anschließend mit partikelförmigem Graphit, weiterem Phenolharz vermischt und carbonisiert werden. Die Herstellung dieser Materialien ist nicht zuletzt aufgrund der zweifachen Carbonisierung vergleichsweise aufwändig und führt zu schlecht reproduzierbaren Ergebnissen.

Die US 2004/0115535 beschreibt ein partikelförmiges Kohlenstoff-Material als Anodenmaterial in Li-ionen-Sekundärbatterien, worin Siliziumpartikel mit Abmessungen unterhalb von 100 nm zusammen mit SiO₂-Partikeln in disperser Verteilung in Partikeln einer kontinuierlichen Kohlenstoffphase vorliegen. Zur Herstellung derartiger Materialien wird eine Mischung von SiOₓ-Partikeln (0,8 ≤ x ≤ 1,5), Kohlenstoffpartikeln und einer carbonisierbaren Substanz bei erhöhter Temperatur carbonisiert. Die Verwendung von SiOₓ-Partiklen macht das Verfahren aufwändig.

H. H. Kung et al., Chem. Mater., 21 (2009) S. 6-8, beschreiben Silizium-Nanopartikel mit Partikelgößen von < 30 nm, die in eine poröse, kovalent und an die Siliziumpartikel angebundene Kohlenstoffmatrix eingebettet sind, und deren Eignung als elektroaktive Anodenmaterialien in Li-Ionen-Batterien. Ihre Herstellung erfolgt durch Umsetzung von Wasserstoff-terminierten Silizium-Nanopartikeln mit Allylphenol im Sinne einer Hydrosilylierung, anschließende Umsetzung der hydrosilylierten Partikel mit Formaldehyd und Resorcin unter Bildung eines kovalent an die Nanopartikel angebundenen Formaldehydharzes und Carbonisierung des erhaltenen Materials. Die Herstellung dieser Materialien ist nicht zuletzt aufgrund der Verwendung von H-terminierten Si-Nanopartikeln und der Hydrosilylierung vergleichsweise aufwändig und kostenintensiv. Zudem führt dieses Verfahren zu schlecht reproduzierbaren Ergebnissen, vermutlich weil die Umsetzung aufgrund den einer Oberflächenreaktion inhärenten Nachteile wie sterische Hinderung und Diffusionsphänome zu unvollständigen und schwankenden Umsätzen führt.

I. Honma et al., Nano Lett., 9 (2009), 72-75 beschreiben nanoporöse Materialien, die aus zwischen exfolierten Graphitschichten eingebetteten SnO₂-Nanopartikeln aufgebaut sind. Diese Materialien sind als Anodenmaterialien für Li-Ionen-Batterien geeignet. Ihre Herstellung erfolgt durch Vermischen von exfolierten Graphitschichten mit SnO₂Nanopartikeln in Ethylenglykol. Die exfolierten Graphitschichten wurden ihrerseits durch Reduktion von oxidiertem und exfoliertem Graphit hergestellt. Auch dieses Verfahren ist vergleichsweise aufwändig und weist prinzipiell ähnliche Probleme wie das von H. H. Kung et al. beschriebene Verfahren auf.

Die US 7094499 beschreibt ein Anodenmaterial für Li-Ionen-Batterien auf der Basis eines Komposits, welches Kohlenstoff-Nanopartikel aufweist.

Die EP 1657768 beschreibt ein kohlenstoffhaltiges Anodenmaterial für Li-Ionen-Sekundärzellen, welches eine Siliciumphase und eine Übergangsmetallphase aufweist.

J. Y. Lee et al., J. Power Sources, 90 (2000), 1, 70-75 beschreiben ein kohlenstoffhaltiges Anodenmaterial auf Basis eines Komposits von synthetischem Graphit mit Sn bzw. SnO.

EP 1032062 beschreibt ein Anodenmaterial für Li-Ionen-Sekundärzellen auf der Basis von Kohlenstoff- und Metall- bzw. Metalloxid-Nanopartikeln.

Zusammenfassend ist zu sagen, dass die bislang aus dem Stand der Technik bekannten Anodenmaterialien auf Basis von Kohlenstoff oder auf Basis von Lithium-Legierungen bezüglich der spezifischen Kapazität, der Ladungs-/Entladungs-Kinetik, und/oder der Zyklenstabilität, wie z.B. Abnahme der Kapazität und/oder hohe oder zunehmende Impedanz nach mehreren Ladungs-/Entladungs-Zyklen nicht zufriedenstellend sind. Die zur Lösung dieser Probleme in jüngerer Zeit vorgeschlagenen Kompositmaterialien mit einer partikelförmigen Halbmetall- oder Metallphase und einer oder mehreren Kohlenstoffphasen vermögen diese Probleme nur teilweise zu lösen, wobei die Qualität derartiger Kompositmaterialien in der Regel nicht in reproduzierbar Weise erzielt werden kann. Zudem ist ihre Herstellung in der Regel so aufwändig, dass eine wirtschaftliche Nutzung nicht möglich ist.

Der vorliegenden Erfindung liegt die Aufgabe zugrunde, ein elektroaktives Material bereitzustellen, das als Anodenmaterial für Li-lonen-Batterien, insbesondere für Li-lonen-Sekundärbatterien geeignet ist und die Nachteile des Standes der Technik löst. Das elektroaktive Material sollte insbesondere wenigstens eine und speziell mehrere der folgenden Eigenschaften aufweisen:
- eine hohe spezifische Kapazität,
- eine hohe Zyklenstabilität,
- eine geringe Selbstentladung,
- eine gute mechanische Stabilität.

Darüber hinaus sollten sich die Materialien wirtschaftlich und vor allem in reproduzierbarer Qualität herstellen lassen.

Es wurde gefunden, dass diese Aufgaben in überraschender Weise durch ein elektroaktives Material mit folgenden Eigenschaften gelöst werden. Das elektroaktive Material umfasst:
a) eine Kohlenstoffphase C;
b) wenigstens eine MOₓ-Phase, worin M für ein Metall oder Halbmetall steht, das ausgewählt ist unter B, Al, Si, Ti, Zr, Sn, Sb und deren Mischungen, x für eine Zahl von 0 bis < k/2 steht, wobei k die maximale Wertigkeit des Metalls oder Halbmetalls bedeutet.

In dem erfindungsgemäßen elektroaktiven Material bilden die Kohlenstoffphase C und die MOₓ-Phase im Wesentlichen co-kontinuierliche Phasendomänen, wobei der mittlere Abstand zweier benachbarter Domänen identischer Phasen maximal 10 nm, insbesondere maximal 5 nm und speziell maximal 2 nm beträgt.

Gegenstand der Erfindung ist somit ein elektroaktives Material mit den hier und im Folgenden angegebenen Eigenschaften.

Aufgrund seiner Zusammensetzung und der speziellen Anordnung der Kohlenstoffphase C und der MOₓ-Phase ist das erfindungsgemäße Material in besonderer Weise als elektroaktives Material für Anoden in Li-Ionen-Zellen, insbesondere in Li-Ionen-Sekundärzellen bzw. -batterien geeignet. Insbesondere zeichnet es sich bei Verwendung in Anoden von Li-Ionen-Zellen und speziell von Li-Ionen-Sekundärzellen durch eine hohe Kapazität und eine gute Zyklenstabilität aus und gewährleistet niedrige Impedanzen in der Zelle. Weiterhin weist es vermutlich aufgrund der co-kontinuierlichen Phasenanordnung eine hohe mechanische Stabilität auf. Zudem lässt es sich einfach und mit reproduzierbarer Qualität herstellen.

Gegenstand der Erfindung ist daher auch die Verwendung des elektroaktiven Materials in Anoden für Lithiumionen-Zellen, insbesondere Lithiumionen-Sekundärzellen, sowie eine Anode für Lithiumionen-Zellen, insbesondere Lithiumionen-Sekundärzellen, die ein erfindungsgemäßes elektroaktives Material umfasst sowie eine Lithiumionen-Zelle, insbesondere eine Lithiumionen-Sekundärzelle, die wenigstens eine Anode aufweist, welche ein erfindungsgemäßes elektroaktives Material enthält.

Die erfindungsgemäßen Materialien lassen sich in besonders einfacher Weise durch ein Zwillingspolymerisationsverfahren, gefolgt von einer Carbonisierung herstellen, ohne dass es einer aufwändigen Funktionalisierung von Nanopartikeln oder einer mehrfachen Carbonisierung bedarf. Gegenstand der Erfindung ist daher auch ein Verfahren zur Herstellung der elektroaktiven Materialien.

Erfindungsgemäß umfasst das elektroaktive Material eine Kohlenstoffphase C. In dieser Phase liegt der Kohlenstoff im Wesentlichen elementar vor, d.h. der Anteil der von Kohlenstoff verschiedenen Atome in der Phase, z.B. N, O, S, P und/oder H, beträgt weniger als 10 Gew.-%, insbesondere weniger als 5 Gew.-%, bezogen auf die Gesamtmenge an Kohlenstoff in der Phase. Der Gehalt an den von Kohlenstoff verschiedenen Atomen in der Phase kann mittels Röntgen-Photoelektronenspektroskopie bestimmt werden. Neben Kohlenstoff kann die Kohlenstoff-Phase herstellungsbedingt insbesondere geringe Mengen an Stickstoff, Sauerstoff und/oder Wasserstoff enthalten. Das molare Verhältnis von Wasserstoff zu Kohlenstoff wird in der Regel einen Wert von 1:2, insbesondere einen Wert von 1:3 und speziell einen Wert von 1:4 nicht überschreiten. Der Wert kann auch 0 oder nahezu 0 sein, z.B. ≤ 0,1.

In der Kohlenstoffphase C liegt der Kohlenstoff vermutlich überwiegend in graphitischer oder amorpher Form vor, wie aufgrund von ESCA-Untersuchungen anhand der charakteristischen Bindungsenergie (284,5 eV) und der charakteristisch asymmetrischen Signalform geschlossen werden kann. Unter Kohlenstoff in graphitischer Form versteht man, dass der Kohlenstoff zumindest teilweise in einer für Graphit typischen hexagonalen Schichtanordnung vorliegt, wobei die Schichten auch gebogen oder exfoliert sein können.

Erfindungsgemäß umfasst das elektroaktive Material eine Phase mit der Stöchiometrie MOₓ, d.h. eine Phase, die im Wesentlichen aus einem Metall oder Halbmetall M besteht, das in oxidischer und/oder elementarer Form vorliegt. Diese Phase wird daher im Folgenden auch als MOₓ-Phase bezeichnet. In der Regel ist das Metall bzw. Halbmetall M ausgewählt unter Metallen, die mit Lithium eine Legierung bilden können, und Mischungen dieser Metalle. Als Beispiele hierfür sind Bor Aluminium, Silizium, Zinn, Zirkon, Titan und Antimon bevorzugt. Hierunter bevorzugt sind Silizium und Titan. Insbesondere machen diese Metalle 90 Gew.-% der von Sauerstoff verschiedenen Atome der MOₓ-Phase aus. Insbesondere sind wenigstens 90 mol-%, insbesondere wenigstens 95 mol-% der Atome M in der MOₓ-Phase Siliziumatome. Neben dem Metall oder Halbmetall kann die MOₓ-Phase Sauerstoff enthalten, wobei die maximal mögliche Menge an Sauerstoffatomen durch die maximale Wertigkeit des Metalls bzw. Halbmetalls bestimmt wird. Dementsprechend beträgt der Wert von x maximal die Hälfte der Wertigkeit des Metalls bzw. Halbmetalls, also maximal k/2. Bevorzugt liegt Sauerstoff, wenn vorhanden, substöchiometrisch vor, d.h. der Wert von x ist kleiner als k/2, und beträgt insbesondere maximal k/4. Bevorzugt steht x für einen Wert von 0 bis 2, insbesondere für einen Wert von 0 bis 1.

In den erfindungsgemäßen elektroaktiven Materialien kann das Molverhältnis von (Halb-)Metallatomen M zu den Kohlenstoffatomen C, d.h. das Molverhältnis M : C, über weite Bereiche variieren und liegt vorzugsweise im Bereich von 1 : 30 bis 2 : 1, insbesondere im Bereich von 1 : 16 bis 1 : 1.

In den erfindungsgemäßen elektroaktiven Materialien liegen die Kohlenstoffphase C und die MOₓ-Phase über weite Bereiche in einer co-kontinuierlichen Anordnung vor, d.h. die jeweilige Phase bildet im Wesentlichen keine isolierten Phasendomänen, die von einer gegebenenfalls kontinuierlichen Phasendomäne umgeben sind. Vielmehr bilden beide Phasen räumlich voneinander getrennte kontinuierliche Phasendomänen, die sich gegenseitig durchdringen, wie man durch Untersuchung der Materialien mittels Transmissionselektronenmikroskopie erkennen kann. Bezüglich des Begriffs kontinuierliche Phasendomäne, diskontinuierliche Phasendomäne und co-kontinuierliche Phasendomäne wird auch auf W. J. Work et al. Definitions of Terms Related to Polymer Blends, Composites and Multiphase Polymeric Materials, (IUPAC Recommendations 2004), Pure Appl. Chem., 76 (2004), S. 1985-2007, insbesondere S. 2003 verwiesen. Hiernach versteht man unter einer co-kontinuierlichen Anordnung einer Zweikomponenten-Mischung eine phasenseparierte Anordnung der beiden Phasen bzw. Komponenten, wobei innerhalb einer Domäne der jeweiligen Phase jeder Bereich der Phasengrenzfläche der Domäne durch einen kontinuierlichen Pfad miteinander verbunden werden kann, ohne dass der Pfad eine Phasengrenzfläche durchschreitet/durchkreuzt.

In den erfindungsgemäßen elektroaktiven Materialien machen die Bereiche, in denen die Kohlenstoffphase und die MOₓ-Phase im Wesentlichen co-kontinuierliche Phasendomänen bilden, wenigstens 80 Vol.-%, insbesondere 90 Vol.-% des elektroaktiven Materials aus.

In den erfindungsgemäßen elektroaktiven Materialien sind die Abstände zwischen benachbarten Phasengrenzen, bzw. die Abstände zwischen den Domänen benachbarter identischer Phasen, gering und liegen im Mittel bei maximal 10 nm, insbesondere bei maximal 5 nm und speziell maximal 2 nm. Unter dem Abstand benachbarter identischer Phasen ist z.B. der Abstand zweier Domänen der MOₓ-Phase, welche durch eine Domäne der Kohlenstoffphase C voneinander getrennt sind, bzw. der Abstand zweier Domänen der Kohlenstoffphase C, welche durch eine Domäne der MOₓ-Phase voneinander getrennt sind, zu verstehen. Der mittlere Abstand zwischen den Domänen benachbarter identischer Phasen kann mittels Röntgenkleinwinkelstreuung (SAXS = Small Angle X-ray Scattering) über den Streuvektor q ermittelt werden (Messung in Transmission bei 20 °C, monochromatisierte CuK_{α}-Strahlung, 2D-Detektor (Image-Plate), Spaltkollimation).

Die Größe der Phasenbereiche und damit die Abstände zwischen benachbarten Phasengrenzen und die Anordnung der Phase läst sich auch durch Transmissionselektronenmikroskopie, insbesondere mittels HAADF-STEM-Technik (HAADF-STEM = high angle annular darkfield scanning electron microscopy). Bei dieser Abbildungstechnik erscheinen vergleichsweise schwere Elemente (wie z.B. Si gegenüber C) heller als leichtere Elemente. Präparationsartefakte können ebenfalls erkannt werden, da dichtere Bereiche der Präparationen heller erscheinen als weniger dichte Bereiche.

Die Herstellung der erfindungsgemäßen elektroaktiven Materialien gelingt durch ein Verfahren, welches in einem ersten Schritt eine sogenannte Zwillingspolymerisation und in einem zweiten Schritt die Carbonisierung, d.h. eine Calcinierung unter weitgehendem oder vollständigem Sauerstoffausschluss, des bei der Zwillingspolymerisation anfallenden organischen Polymeren umfasst.

Unter einer Zwillingspolymerisation versteht man die Polymerisation eines Monomeren, das
- eine erste Monomereinheit, welche ein Metall oder Halbmetall, dass Oxide bildet, aufweist, und
- eine zweite organische Monomereinheit aufweist, welche über eine oder mehrere chemische Bindungen, insbesondere über eine oder mehrere kovalente Bindungen mit der ersten Monomereinheit verknüpft ist.

Die Polymerisationsbedingungen einer Zwillingspolymerisation sind so gewählt, dass bei der Polymerisation des Monomers die erste und die zweite Monomereinheit synchron polymerisieren, wobei die erste Monomereinheit ein erstes, in der Regel oxidisches, polymeres Material bildet, welches das Metall oder Halbmetall enthält, und gleichzeitig die zweite Monomereinheit ein organisches Polymer bildet, welches aus den zweiten Monomereinheiten aufgebaut ist. Der Begriff "synchron" bedeutet nicht zwingend, dass die Polymerisation der ersten und der zweiten Monomereinheit mit gleicher Geschwindigkeit ablaufen. Vielmehr versteht man unter "synchron", dass die Polymerisation der ersten und der zweiten Monomereinheit kinetisch gekoppelt sind und durch die gleichen Polymerisationsbedingungen ausgelöst werden.

Unter den Polymerisationsbedingungen tritt eine teilweise oder vollständige Phasenseparation in eine erste Phase, welche von dem ersten polymeren Material gebildet wird, und eine zweite Phase, welche von dem aus den zweiten Monomereinheiten aufgebauten organischen Polymer (zweites polymeres Material) gebildet wird, auf. Auf diese Weise erhält man ein Komposit-Material aus dem ersten polymeren Material und dem zweiten polymeren Material. Aufgrund der synchronen Polymerisation kommt es zu einer Ausbildung sehr kleiner Phasenbereiche aus dem ersten polymeren Material und dem zweiten polymeren Material, deren Abmessungen im Bereich weniger Nanometer liegen, wobei die Phasendomänen des ersten polymeren Materials und die Phasendomänen des zweiten polymeren Materials eine co-kontinuierliche Anordnung aufweisen. Die Abstände zwischen benachbarten Phasengrenzen bzw. die Abstände zwischen den Domänen benachbarter identischer Phasen sind äußerst gering und liegen im Mittel bei maximal 10 nm, insbesondere bei maximal 5 nm und speziell bei maximal 2 nm. Eine makroskopisch sichtbare Trennung in diskontinuierliche Domänen der jeweiligen Phase tritt nicht auf. Überraschenderweise bleibt die co-kontinuierliche Anordnung der Phasendomänen ebenso wie die geringen Dimensionen der Phasendomänen beim anschließenden Calcinieren weitgehend erhalten.

Die Zwillingspolymerisation ist grundsätzlich bekannt und wurde erstmalig von S. Spange et al., Angew. Chem. Int. Ed., 46 (2007) 628-632 anhand der kationischen Polymerisation von Tetrafurfuryloxysilan zu Polyfurfurylalkohol und Siliziumdioxid sowie anhand der kationischen Polymerisation von Difurfuryloxydimethylsilan zu Polyfurfurylalkohol und Polydimethylsiloxan beschrieben. Außerdem werden in PCT/EP 2008/010168 [WO 2009/083082] und in PCT/EP 2008/010169 [WO 2009/083083] eine Zwillingspolymerisation von gegebenenfalls substituiertem 2,2'-Spiro[4H-1,3,2-benzodioxasilin] (im Folgenden SPISI) beschrieben.

Monomere, die für die Zwillingspolymerisation geeignet sind, sind aus dem Stand der Technik bekannt oder können in analoger Weise zu den dort beschriebenen Methoden hergestellt werden. An dieser Stelle sei beispielsweise auf die eingangs zitierte Literatur sowie auf die folgenden Literaturstellen verwiesen:
- Silylenolether (Chem. Ber. 119, 3394 (1986); J. Organomet. Chem. 244, 381 (1981); JACS 112, 6965 (1990))
- Cycloboroxane (Bull. Chem. Soc. Jap. 51, 524 (1978); Can. J. Chem. 67,1384 (1989); J. Organomet. Chem. 590, 52 (1999))
- Cyclosilikate und -germanate (Chemistry of Heterocyclic Compounds, 42, 1518, (2006); Eur. J. Inorg. Chem. (2002), 1025; J. Organomet. Chem. 1, 93 (1963); J. Organomet. Chem. 212, 301 (1981); J. Org. Chem. 34, 2496 (1968); Tetrahedron 57, 3997 (2001) sowie die älteren Internationalen Anmeldungen WO 2009/083082 und WO2009/083083)
- Cyclostannane (J. Organomet. Chem. 1, 328 (1963))
- Cyclozirkonate (JACS 82, 3495 (1960))

Die zur Herstellung der erfindungsgemäßen Materialien geeigneten Monomere lassen sich insbesondere durch die allgemeine Formel I beschreiben: 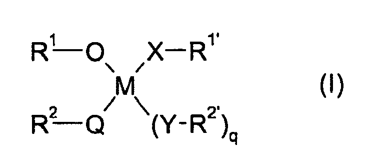 worin
- M: für ein Metall oder Halbmetall steht, das unter B, Al, Si, Ti, Zr, Sn und Sb ausgewählt ist, wobei M besonders bevorzugt für Si steht;
- R¹, R²: gleich oder verschieden sein können und für einen Rest Ar-C(R^{a},R^{b})- stehen, worin Ar für einen aromatischen oder heteroaromatischen Rest steht, der gegebenenfalls 1 oder 2 Substituenten aufweist, die unter Halogen, CN, C₁-C₆-Alkyl, C₁-C₆-Alkoxy und Phenyl ausgewählt sind und R^{a}, R^{b} unabhängig voneinander für Wasserstoff oder Methyl stehen oder gemeinsam ein Sauerstoffatom oder eine Methylidengruppe (=CH₂) bedeuten, oder die Reste R¹ und R² gemeinsam mit dem Sauerstoffatom bzw. der Gruppe Q, an die sie gebunden sind, für einen Rest der Formel A 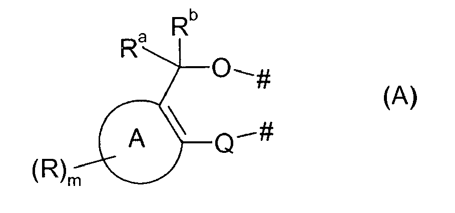 stehen, worin # die Verknüpfung mit M bedeutet, A für einen an die Doppelbindung kondensierten aromatischen oder heteroaromatischen Ring steht, m für 0, 1 oder 2 steht, die Reste R gleich oder verschieden sein können und unter Halogen, CN, C₁-C₆-Alkyl, C₁-C₆-Alkoxy und Phenyl ausgewählt sind und R^{a}, R^{b} die zuvor genannten Bedeutungen aufweisen,
- X, Y: gleich oder verschieden sein können und für Sauerstoff, Schwefel, NH oder eine chemische Bindung stehen,
- q: entsprechend der Wertigkeit von M für 0, 1 oder 2 steht,
- Q: Sauerstoff, Schwefel oder NH und insbesondere Sauerstoff bedeutet;
- R¹', R²': gleich oder verschieden sein können und für C₁-C₆-Alkyl, C₃-C₆-Cycloalkyl, Aryl oder einen Rest Ar'-C(R^{a'},R^{b'})- stehen, worin Ar' die für Ar angegebenen Bedeutungen hat und R^{a'}, R^{b'} die für R^{a}, R^{b} angegebenen Bedeutungen aufweisen, oder für q = 1, R^{1'}, R^{2'} gemeinsam mit X und Y für einen Rest der Formel A, wie zuvor definiert, stehen können.

Für die Herstellung der erfindungsgemäßen Materialien sind auch Monomere der Formel I geeignet, worin M, R¹, R², Q, q, Y und R^{2'} die zuvor genannten Bedeutungen aufweisen, worin der Rest R^{1'} für einen Rest der Formel: 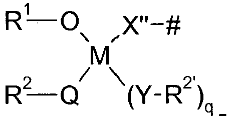 steht, worin q, R¹, R², R^{2'}, Y und Q die zuvor genannten Bedeutungen haben, X" eine der für Q genannten Bedeutungen hat und insbesondere für Sauerstoff steht, und # die Bindung an M bedeutet. Hierunter sind solche Monomere bevorzugt, worin M, R¹, R², Q, q, Y und R^{2'} die als bevorzugt angegebenen Bedeutungen aufweisen, insbesondere solche, worin die Reste R¹Q und R²G zusammen für einen Rest der Formel A stehen.

Gegenstand der vorliegende Erfindung ist daher auch ein Verfahren zur Herstellung eines elektroaktiven Materials, das
a) eine Kohlenstoffphase C wie zuvor definiert; und
b) wenigstens eine MOₓ-Phase, wie zuvor definiert, worin M für ein Metall oder Halbmetall, und zwar für B, Al, Si, Ti, Zr, Sn oder Sb und speziell für Si steht, x für eine Zahl von 0 bis < k/2, insbesondere für eine Zahl von 0 bis 2 und speziell für eine Zahl von 0 bis 1 steht, wobei k die maximale Wertigkeit des Metalls oder Halbmetalls bedeutet;
   umfasst, wobei das Verfahren die folgenden Schritte aufweist:
   i) Polymerisation wenigstens eines Monomers der Formel I, wie zuvor definiert, in einem nicht-wässrigen Polymerisationsmedium
      und
   ii) Calcinieren des dabei erhaltenen Polymers unter weitgehendem oder vollständigem Ausschluss von Sauerstoff.

Gegenstand der vorliegende Erfindung ist daher auch ein elektroaktives Material, das
a) eine Kohlenstoffphase C wie zuvor definiert; und
b) wenigstens eine MOₓ-Phase wie zuvor definiert, worin M für ein Metall oder Halbmetall, und zwar für B, Al, Si, Ti, Zr, Sn oder Sb und speziell für Si steht, x für eine Zahl von 0 bis < k/2, insbesondere für eine Zahl von 0 bis 2 und speziell für eine Zahl von 0 bis 1 steht, wobei k die maximale Wertigkeit des Metalls oder Halbmetalls bedeutet;
umfasst und das durch das erfindungsgemäße Verfahren erhältlich ist.

Unter einem aromatischen Rest versteht man im Sinne der Erfindung einen carbocyclischen aromatischen Kohlenwasserstoff-Rest wie Phenyl oder Naphthyl.

Unter einem heteroaromatischen Rest versteht man im Sinne der Erfindung einen theterocyclischen aromatischen Rest, der in der Regel 5 oder 6 Ringglieder aufweist, wobei eines der Ringglieder ein Heteroatom ist, das unter Stickstoff, Sauerstoff und Schwefel ausgewählt ist, und gegebenenfalls 1 oder 2 weitere Ringlieder ein Stickstoffatom sein können und die verbleibenden Ringglieder Kohlenstoff sind. Beispiele für heteroaromatische Reste sind Furyl, Thienyl, Pyrrolyl, Pyrazolyl, Imidazolyl, Oxazolyl, Isoxazolyl, Pyridyl und Thiazolyl.

Unter einem kondensierten aromatischen Rest bzw. Ring versteht man im Sinne der Erfindung einen carbocyclischen aromatischen, zweiwertigen Kohlenwasserstoff-Rest wie o-Phenylen (Benzo) oder 1,2-Naphthylen (Naphtho).

Unter einem kondensierten heteroaromatischen Rest bzw. Ring versteht man im Sinne der Erfindung einen heterocyclischen aromatischen Rest wie zuvor definiert, worin zwei benachbarte C-Atome die in Formel A bzw. in den Formeln II und III dargestellte Doppelbindung bilden.

Gemäß einer ersten Ausführungsform der Monomere der Formel I stehen die Gruppen R¹O und R²O gemeinsam für einen Rest der Formel A wie zuvor definiert, insbesondere für einen Rest der Formel Aa: 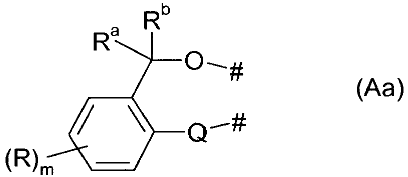 worin #, m, Q, R, R^{a} und R^{b} die zuvor genannten Bedeutungen aufweisen. In den Formeln A und Aa steht die Variable m insbesondere für 0. Q steht insbesondere für Sauerstoff. Sofern m für 1 oder 2 steht, bedeutet R insbesondere eine Methyl- oder Methoxygruppe. In den Formeln A und Aa stehen R^{a} und R^{b} insbesondere für Wasserstoff.

Unter den Monomeren der ersten Ausführungsform sind insbesondere solche Monomere der Formel I bevorzugt, worin q = 1 ist und worin die Gruppen X-R^{1'} und Y-R^{2'} gemeinsam für einen Rest der Formel A, insbesondere für einen Rest der Formel Aa stehen. Derartige Monomere lassen sich durch die folgenden Formeln II bzw. IIa beschreiben:

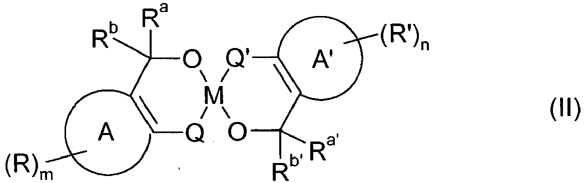

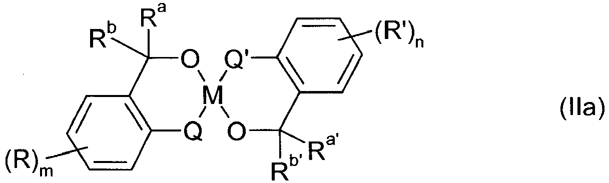

Unter den Monomeren der ersten Ausführungsform sind weiterhin solche Monomere der Formel I bevorzugt, worin q für 0 oder 1 steht und worin die Gruppe X-R^{1'} für einen Rest der Formel A' oder Aa' steht: 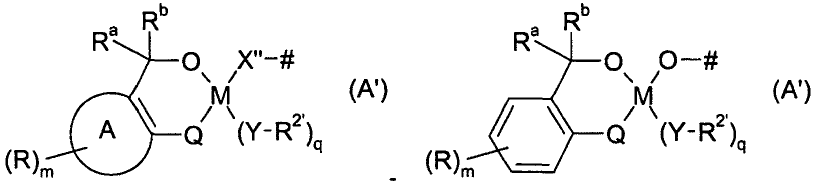 worin m A, R, R^{a}, R^{b}, G, Q, X", Y, R^{2'} und q die zuvor genannten, insbesondere die als bevorzugt genannten Bedeutungen aufweisen.

Derartige Monomere lassen sich durch die folgenden Formeln II' bzw. IIa' beschreiben:

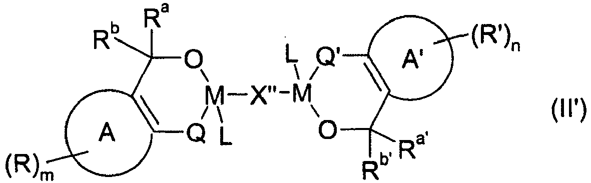

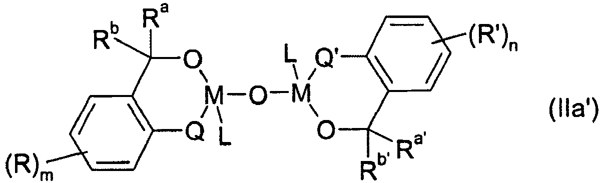

In den Formeln II und II' haben die Variablen die folgenden Bedeutungen:
- M: steht für ein Metall oder Halbmetall, und zwar B, Al, Si, Ti, Zr, Sn, oder Sb, besonders bevorzugt Si, Ti, Zr oder Sn, speziell Si;
- A, A': stehen unabhängig voneinander für einen an die Doppelbindung kondensierten aromatischen oder heteroaromatischen Ring;
- m, n: stehen unabhängig voneinander für 0, 1 oder 2, insbesondere für 0;
- Q, Q': stehen unabhängig voneinander für O, S oder NH, insbesondere O oder NH und speziell für O;
- R, R': sind unabhängig voneinander unter Halogen, CN, C₁-C₆-Alkyl, C₁-C₆-Alkoxy und Phenyl ausgewählt und stehen insbesondere für Methyl oder Methoxy;
- R^{a}, R^{b}, R^{a}', R^{b}': sind unabhängig voneinander ausgewählt unter Wasserstoff und Methyl oder R^{a} und R^{b} und/oder R^{a'} und R^{b'} stehen jeweils gemeinsam für ein Sauerstoffatom oder =CH₂; insbesondere stehen R^{a}, R^{b}, R^{a'}, R^{b}' jeweils für Wasserstoff;
- L: steht für eine Gruppe (Y-R^{2'})_{q}, worin Y, R^{2'} und q die zuvor genannten Bedeutungen aufweisen; insbesondere steht q für 0; und
- X": hat eine der für Q genannten Bedeutungen und steht insbesondere für Sauerstoff.

In Formellla haben die Variablen die folgenden Bedeutungen:
- M: steht für ein Metall oder Halbmetall, und zwar B, Al, Si, Ti, Zr, Sn, oder Sb, besonders bevorzugt Si, Ti, Zr oder Sn, speziell Si;
- m, n: stehen unabhängig voneinander für 0, 1 oder 2, insbesondere für 0;
- Q, Q': stehen unabhängig voneinander für O, S oder NH, insbesondere O oder NH und speziell für O;
- R, R': sind unabhängig voneinander unter Halogen, CN, C₁-C₆-Alkyl, C₁-C₆-Alkoxy und Phenyl ausgewählt und stehen insbesondere für Methyl oder Methoxy;
- R^{a}, R^{b}, R^{a}', R^{b'}: sind unabhängig voneinander ausgewählt unter Wasserstoff und Methyl oder R^{a} und R^{b} und/oder R^{a'} und R^{b'} stehen jeweils gemeinsam für ein Sauerstoffatom oder =CH₂; insbesondere stehen R^{a}, R^{b}, R^{a}', R^{b'} jeweils für Wasserstoff;
- L: steht für eine Gruppe (Y-R^{2'})_{q}, worin Y, R^{2'} und q die zuvor genannten Bedeutungen aufweisen und q insbesondere für 0 steht.

Ein Beispiel für ein Monomer der Formel II bzw. IIa ist 2,2'-Spirobis[4H-1,3,2-benzodioxasilin] (Verbindung der Formel IIa mit M = Si, m = n = 0, G = O, Rₐ = R^{b} = R^{a'} = R^{b'} = Wasserstoff). Derartige Monomere sind aus den älteren Internationalen Patentanmeldungen WO2009/083082 und PCT/EP 2008/010169 [WO2009/083083] bekannt oder können nach den dort beschriebenen Methoden hergestellt werden. Ein weiteres Beispiel für ein Monomer IIa ist 2,2-Spirobs[4H-1,3,2-benzodioxaborin] (Bull. Chem. Soc. Jap. 51 (1978) 524): (Verbindung der Formel IIa mit M = B, m = n = 0, G = O, Rₐ = R^{b} = R^{a'} = R^{b'} = Wasserstoff). Ein weiteres Beispiel für ein Monomer IIa' ist Bis-(4H-1,3,2-benzodioxaborin-2-yl)oxid ((Verbindung der Formel IIa' mit M = B, m = n = 0, L abwesend (q = 0), G = O, R^{a} = R^{b} = R^{a'} = R^{b'} = Wasserstoff; Bull. Chem. Soc. Jap. 51 (1978) 524).

In den Monomeren II und IIa bildet die Einheit MQQ' bzw. MO₂ die polymerisierbare Einheit A, wohingegen die verbleibenden Teile des Monomers II bzw. IIa, d.h. die Gruppen der Formel A bzw. Aa, abzüglich der Atome Q bzw. Q' (bzw. abzüglich des Sauerstoffatoms in Aa) die polymerisierbaren Einheiten B bilden.

Unter den Monomeren der ersten Ausführungsform sind weiterhin solche Monomere der Formel I bevorzugt, worin die Gruppen X-R^{1'} und Y-R^{2'} gleich oder verschieden sind und unter C₁-C₆-Alkyl. C₃-C₆-Cycloalkyl und Aryl, wie z.B. Phenyl ausgewählt sind, d.h. X und Y stehen für eine chemische Bindung. Derartige Monomere lassen sich durch die folgenden Formeln III bzw. IIIa beschreiben:

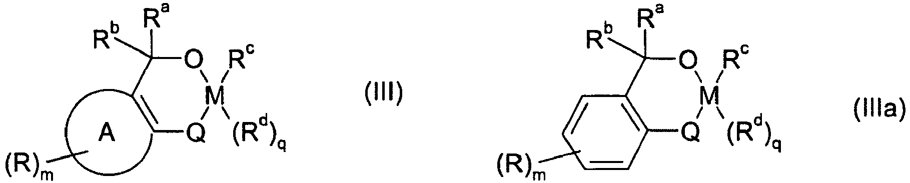

In Formel III haben die Variablen die folgenden Bedeutungen:
- M: steht für ein Metall oder Halbmetall, und zwar B, Al, Si, Ti, Zr, Sn oder Sb, besonders bevorzugt Si, Ti, Zr oder Sn, speziell Si;
- A: steht für einen an die Doppelbindung kondensierten aromatischen oder heteroaromatischen Ring;
- m: steht für 0, 1 oder 2, insbesondere 0;
- q: steht, entsprechend der Wertigkeit und Ladung von M, für 0, 1 oder 2;
- Q: steht für O, S oder NH, insbesondere O oder NH und speziell für O;
- Reste R: sind unabhängig voneinander unter Halogen, CN, C₁-C₆-Alkyl, C₁-C₆-Alkoxy und Phenyl ausgewählt und stehen insbesondere für Methyl oder Methoxy;
- R^{a}, R^{b}: sind unabhängig voneinander ausgewählt unter Wasserstoff und Methyl oder R^{a} und R^{b} stehen gemeinsam für ein Sauerstoffatom oder =CH₂ s, und stehen insbesondere beide für Wasserstoff;
- R^{c}, R^{d}: sind gleich oder verschieden und unter C₁-C₆-Alkyl, C₃-C₆-Cycloalkyl und Aryl ausgewählt und stehen insbesondere für Methyl.

In Formel IIIa haben die Variablen die folgenden Bedeutungen:
- M: steht für ein Metall oder Halbmetall, und zwar B, Al, Si, Ti, Zr, Sn oder Sb, besonders bevorzugt Si, Ti, Zr oder Sn, speziell Si;
- m: steht für 0, 1 oder 2, insbesondere 0;
- q: steht, entsprechend der Wertigkeit und Ladung von M, für 0, 1 oder 2;
- Q: steht für O, S oder NH, insbesondere O oder NH und speziell für Q;
- Reste R: sind unabhängig voneinander unter Halogen, CN, C₁-C₆-Alkyl, C₁-C₆-Alkoxy und Phenyl ausgewählt und stehen insbesondere für Methyl oder Methoxy;
- R^{a}, R^{b}: sind unabhängig voneinander ausgewählt unter Wasserstoff und Methyl oder stehen gemeinsam für ein Sauerstoffatom oder =CH₂, und stehen insbesondere beide für Wasserstoff;
- R^{c}, R^{d}: sind gleich oder verschieden und unter C₁-C₆-Alkyl, C₃-C₆-Cycloalkyl und Aryl ausgewählt und stehen insbesondere für Methyl.

Beispiele für Monomere der Formel III bzw. IIIa sind 2,2-Dimethyl-4H-1,3,2-benzodioxasilin (Verbindung der Formel IIIa mit M = Si, q = 1, m = 0, G = O, R^{a} = R^{b} = Wasserstoff, R^{c} = R^{d} = Methyl), 2,2-Dimethyl-4H-1,3,2-benzooxazasilin, (Verbindung der Formel IIIa mit M = Si, q = 1, m = 0, G = NH, Rₐ = R^{b} = Wasserstoff, R^{c} = R^{d} = Methyl), 2,2-Dimethyl-4-oxo-1,3,2-benzodioxasilin (Verbindung der Formel IIIa mit M = Si, q = 1, m = 0, G = O, R^{a} + R^{b} = O, R^{c}- = R^{d} = Methyl) und 2,2-Dimethyl-4oxo-1,3,2-benzooxazasilin, (Verbindung der Formel IIIa mit M = Si, q = 1, m = 0, G = NH, R^{a} + R^{b} = O, R^{c} = R^{d} = Methyl). Derartige Monomere sind bekannt, z.B. aus Wieber et al. Journal of Organometallic Chemistry, 1, 1963, 93, 94. Weitere Beispiele für Monomere IIIa sind 2,2-Diphenyl[4H-1,3,2-benzodioxasilin] (J. Organomet. Chem. 71 (1974) 225); 2,2-Di n-butyl[4H-1,3,2-benzodioxastannin] (Bull. Soc. Chim. Belg. 97 (1988) 873); 2,2-Dimethyl[4-methyliden-1,3,2-benzodioxasilin] (J. Organomet. Chem., 244, C5-C8 (1983)); 2-Methyl-2-vinyl[4-oxo-1,3,2-benzodioxazasilin].

Gemäß einer zweiten Ausführungsform der Monomere der Formel I bedeuten R¹ und R² eine Gruppe Ar-C(R^{a},R^{b}), und vorzugsweise eine Gruppe Ar-CH₂ (R^{a} = R^{b} = Was-serstoff), wobei Ar die zuvor genannten Bedeutungen aufweist und insbesondere ausgewählt ist unter Furyl, Thienyl, Pyrrolyl und Phenyl, wobei die vier genannten Ringe unsubstituiert sind oder einen oder zwei Substituenten aufweisen, die unter Halogen, CN, C₁-C₆-Alkyl, C₁-C₆-Alkoxy und Phenyl ausgewählt sind. Insbesondere steht Ar für Furyl, das gegebenenfalls einen oder zwei Substituenten aufweist, die unter Halogen, CN, C₁-C₆-Alkyl, C₁-C₆-Alkoxy und Phenyl ausgewählt sind, und das insbesondere unsubstituiert ist. Hierbei können R¹ und R² verschieden sein.

Die Monomere der zweiten Ausführungsform lassen sich durch die allgemeine Formel IV beschreiben: 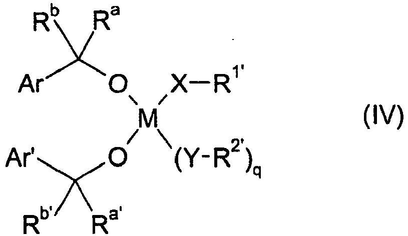 worin M, q, Ar, X, Y, R^{1'}, R^{2'}, R^{a} und R^{b} die zuvor genannten Bedeutungen aufweisen, Ar' eine der für Ar genannten Bedeutungen aufweist und R^{a'} und R^{b'} unabhängig voneinander für Wasserstoff oder Methyl stehen. In Formel IV steht M für B, Al, Si, Ti, Zr, Sn oder Sb und speziell für Si. Die Variable q steht insbesondere für 1. In Formel IV stehen R^{a} und R^{b} sowie R^{a'} und R^{b'} insbesondere für Wasserstoff. In Formel IV können Ar und Ar' gleich oder verschieden sein und sind insbesondere ausgewählt unter Furyl, Thienyl, Pyrrolyl und Phenyl, wobei die vier genannten Ringe unsubstituiert sind oder einen oder zwei Substituenten aufweisen, die unter Halogen, CN, C₁-C₆-Alkyl, C₁-C₆-Alkoxy und Phenyl ausgewählt sind. Insbesondere stehen Ar und Ar' für Furyl, das gegebenenfalls einen oder zwei Substituenten aufweist, die unter Halogen, CN, C₁-C₆-Alkyl, C₁-C₆-Alkoxy und Phenyl ausgewählt sind, und das insbesondere unsubstituiert ist.

Unter den Monomeren der zweiten Ausführungsform sind insbesondere solche Monomere der Formel IV bevorzugt, worin q = 0, 1 oder 2, insbesondere q = 1 ist und die Gruppen X-R^{1'} und Y-R^{2'} gleich oder verschieden sind und für eine Gruppe Ar-C(R^{a},R^{b}), und vorzugsweise eine Gruppe Ar-CH₂ (R^{a} = R^{b} = Wasserstoff) stehen, wobei Ar die zuvor genannten Bedeutungen aufweist und insbesondere ausgewählt ist unter Furyl, Thienyl, Pyrrolyl und Phenyl, wobei die vier genannten Ringe unsubstituiert sind oder einen oder zwei Substituenten aufweisen, die unter Halogen, CN, C₁-C₆-Alkyl, C₁-C₆-Alkoxy und Phenyl ausgewählt sind. Derartige Monomere lassen sich durch die folgenden Formeln V bzw. Va beschreiben: 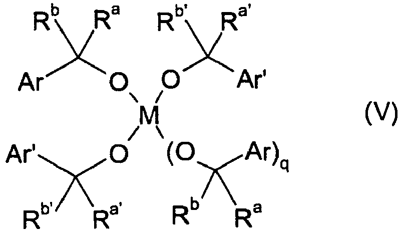 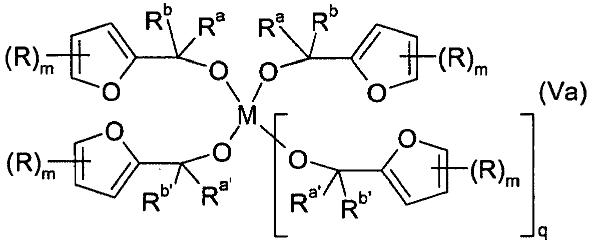 worin M, k, Ar, R^{a} und R^{b} die zuvor genannten Bedeutungen aufweisen, Ar' eine der für Ar angegebenen Bedeutungen hat, R^{a'} und R^{b'} für Wasserstoff oder Methyl und speziell für Wasserstoff stehen. In den Formeln V und Va steht M für B, Al, Si, Ti, Zr, Sn oder Sb und speziell für Si. In den Formeln V und Va steht q insbesondere für 1. In Formel V sind Ar und Ar' gleich oder verschieden und vorzugsweise ausgewählt unter Furyl, Thienyl, Pyrrolyl und Phenyl, wobei die vier genannten Ringe unsubstituiert sind oder einen oder zwei Substituenten aufweisen, die unter Halogen, CN, C₁-C₆-Alkyl, C₁-C₆-Alkoxy und Phenyl ausgewählt sind. Insbesondere stehen Ar und Ar' für Furyl, das gegebenenfalls einen oder zwei Substituenten aufweist, die unter Halogen, CN, C₁-C₆-Alkyl, C₁-C₆-Alkoxy und Phenyl ausgewählt sind, und das insbesondere unsubstituiert ist (Formel Va). In Formel Va steht m für 0, 1 oder 2 und insbesondere für 0, und R ist ausgewählt unter Halogen, CN, C₁-C₆-Alkyl, C₁-C₆-Alkoxy und Phenyl und speziell unter Methyl und Methoxy. Ein Beispiel für ein Monomer der Formel V bzw. Va ist Tetrafurfuryloxysilan (Verbindung der Formel Va mit M = Si, q = 1 m m = 0, R^{a} = R^{b} = Wasserstoff). Ein weiteres Beispiel für das Monomer V bzw. Va ist Tetrafurfurylorthotitanat: Adv. Mater. 2008, 20, 4113. Diese Verbindung tetramerisiert zu (µ4-Oxido)-hexakis(m-furfuryloxo)-octakis(furfuryloxo)tetratitanium, welches als Zwillingsmonomer eingesetzt wird. Ein weiteres Beispiel für das Monomer V bzw. Va ist Trifurfuryloxyboran. Derartige Monomere sind aus dem Stand der Technik bekannt, z.B. aus dem eingangs zitierten Aufsatz von Spange et al. und der darin zitierten Literatur, oder können in analoger Weise hergestellt werden.

Unter den Monomeren der zweiten Ausführungsform sind weiterhin solche Monomere der Formel IV bevorzugt, in denen die Gruppen X-R^{1'} und Y-R^{2'} gleich oder verschieden sind und unter C₁-C₆-Alkyl, C₃-C₆-Cycloalkyl und Aryl, wie z.B. Phenyl, ausgewählt sind, d.h. X und Y stehen für eine chemische Bindung. Derartige Monomere lassen sich durch die folgenden Formeln VI bzw. VIa beschreiben:

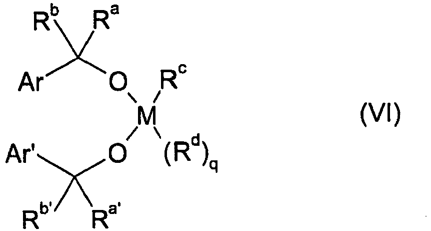

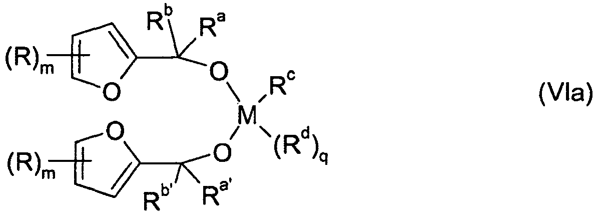

In den Formeln VI bzw. VIa steht M für B, Al, Si, Ti, Zr, Sn oder Sb und speziell für Si. Die Variable q steht insbesondere für 1. In Formel VI sind Ar und Ar' gleich oder verschieden und vorzugsweise ausgewählt unter Furyl, Thienyl, Pyrrolyl und Phenyl, wobei die vier genannten Ringe unsubstituiert sind oder einen oder zwei Substituenten aufweisen, die unter Halogen, CN, C₁-C₆-Alkyl, C₁-C₆-Alkoxy und Phenyl ausgewählt sind. Insbesondere stehen Ar und Ar' für Furyl, das gegebenenfalls einen oder zwei Substituenten aufweist, die unter Halogen, CN, C₁-C₆-Alkyl, C₁-C₆-Alkoxy und Phenyl ausgewählt sind, und das insbesondere unsubstituiert ist (Formel Va). In Formel VIa steht m für 0, 1 oder 2 und insbesondere für 0, und R ist ausgewählt unter Halogen, CN, C₁-C₆-Alkyl, C₁-C₆-Alkoxy und Phenyl und speziell unter Methyl und Methoxy. In den Formeln VI und Via stehen R^{c} und R^{d} insbesondere für C₁-C₆-Alkyl und speziell für Methyl. Ein Beispiel für ein Monomer der Formel VI bzw. VIa ist Bis(furfuryloxy)dimethylsilan (Verbindung der Formel VIa mit M = Si, q = 1, m = 0, R^{a} = R^{b} = Wasserstoff, R^{c} = R^{d} = Methyl). Derartige Monomere sind aus dem Stand der Technik bekannt, z.B. aus dem eingangs zitierten Aufsatz von Spange et al. und der darin zitierten Literatur, oder können in analoger Weise hergestellt werden.

Zur Herstellung der erfindungsgemäßen Materialien sind weiterhin aromatische Verbindungen geeignet, die im Mittel wenigstens zwei an gleiche oder verschiedene Arylgruppen, insbesondere an Phenylringe gebundene Trialkyisilyloxymethylgruppen und/oder Aryldialkylsilyloxymethylgruppen aufweisen. Alkyl steht in diesem Zusammenhang für Alkyl mit 1 bis 4 C-Atomen, insbesondere für Methyl oder Ethyl. Aryl bedeutet in diesem Zusammenhang Phenyl oder Naphthyl, insbesondere Phenyl. Ein Beispiel für eine Trialkylsilyloxymethylgruppe ist Trimethylsilyloxymethyl ((HsC)₃Si-O-CH₂-). Ein Beispiel für eine Aryldialkylsilyloxymethylgruppe ist Dimethylphenylsilyloxymethyl (Phenyl(H₃C)₂Si-O-CH₂-) Hierbei kann der Arylring, an welchen die Trialkylsily-Ioxymethylgruppen und/oder Aryldialkylsilyloxymethylgruppen gebunden sind, weitere Substituenten aufweisen, wie beispielsweise C₁-C₄-Alkoxy wie Methoxy, C₁-C₄-Alkyl, Trialkylsilyloxy oder Aryldialkylsilyloxy. Insbesondere handelt es sich bei derartigen Zwillingsmonomeren um phenolische Verbindungen, die wenigstens zwei an Phenylringe der phenolischen Verbindung gebundene Trialkylsilyloxymethylgruppen und/oder Aryldialkylsilyloxymethylgruppen aufweisen, wobei die OH-Gruppen der phenolischen Verbindungen verethert sein können, insbesondere mit Trialkylsilylgruppen und/oder Aryldialkylsilylgruppen. Derartige Verbindungen können durch Hydroxymethylierung von aromatischen Verbindungen, insbesondere von phenolischen Verbindungen und anschließende Umsetzung mit Trialkylhalogensilanen bzw. mit Aryldialkylhalogensilanen hergestellt werden, wobei im Falle phenolischer Ausgangsmaterialien nicht nur die Hydroxymethylgruppen, sondern auch die phenolischen OH-Gruppen in die entsprechenden Silylether überführt werden. Beispiele für aromatische Verbindungen sind insbesondere phenolische Verbindungen wie Phenol, Kresole und Bisphenol A (= 2,2-Bis-(4-hydroxyphenyl)propan. Die vorgenannten aromatischen Verbindungen, die im Mittel wenigstens zwei an gleiche oder verschiedene Arylgruppen, insbesondere an Phenylringe gebundene Trialkylsilyloxymethylgruppen und/oder Aryldialkylsilyloxy-methylgruppen aufweisen, können untereinander copolymerisiert werden. In diesem Fall würde man solche Verbindungen wählen, die sich in den zugrundeliegenden Aromaten unterscheiden. Vorzugsweise werden die aromatischen Verbindungen, die im Mittel wenigstens zwei an gleiche oder verschiedene Arylgruppen, insbesondere an Phenylringe gebundene Trialkylsilyloxymethylgruppen und/oder Aryldialkylsilyloxy-methylgruppen aufweisen, zusammen mit den Monomeren der Formel II, IIa, II' oder II'a oder mit den Verbindungen der Formeln IV oder V bzw. Va copolymerisiert.

In einer bevorzugten Ausführungsform der Erfindung umfasst das zu polymerisierende Monomer der Formel I wenigstens ein Monomer der Formel II, insbesondere ein Monomer der Formel IIa, worin die Variablen die zuvor genannten Bedeutungen und insbesondere die als bevorzugt genannten Bedeutungen aufweisen. Insbesondere bildet das Monomer der Formel II den Hauptbestandteil der zu polymerisierenden Monomere, vorzugsweise wenigstens 90 Gew.-%. Insbesondere ist das Monomer der Formel II und speziell der Formel IIa alleiniges Monomer.

In einer ebenfalls bevorzugten Ausführungsform der Erfindung umfasst das Monomer der Formel I ein erstes Monomer und wenigstens ein zweites Monomer, das von dem ersten Monomer verschieden ist, z.B. in der Art des Atoms M oder in wenigstens einem der Reste R¹, R², XR^{1'} und/oder YR^{2'}. Insbesondere umfassen dann die zu polymerisierenden Monomere wenigstens ein Monomer der Formel II, insbesondere ein Monomer der Formel IIa, sowie ein davon verschiedenes Monomer, das vorzugsweise ausgewählt ist unter Monomeren der Formel II bzw. IIa, die sich von dem ersten Monomer der Formel II bzw. IIa im Metallatom entscheiden, sowie unter Monomeren der Formeln II', IIa'. III, IIIa, IV, V, Va, VI und VIa. In diesem Fall liegt das Gewichtsverhältnis der Monomere des Monomers der Formel II bzw. IIa zu dem bzw. den weiteren Monomeren in der Regel im Bereich von 10:1 1 bis 1:10.

Bei der Polymerisation der Monomere der Formel I, und dementsprechend auch bei der Polymerisation der Monomere der Formeln II, IIa, III, IIIa, IV, V, Va, VI und VIa, bilden die Reste R¹ und R², bzw. die den Resten R¹ und R² entsprechenden Molekülteile, sowie für X = Y = O die Reste R^{1'} und R^{2'}, bzw. die den Resten R^{1'} und R^{2'} entsprechenden Molekülteile, das zweite, organische polymere Material, wohingegen das (Halb-)Metallatom M mit einem Teil der Sauerstoffatome und, wenn X und Y für eine Bindung stehen, den Resten XR^{1'} und YR^{2'} das erste polymere Material bildet.

Die Polymerisation der Monomere I kann in Analogie zu den im Stand der Technik beschriebenen Methoden erfolgen und wird insbesondere unter protischer Katalyse oder in Gegenwart von aprotischen Lewis-Säuren durchgeführt. Bevorzugte Katalysatoren sind hierbei Brönstedt-Säuren, beispielsweise organische Carbonsäuren wie z.B. Trifluoressigsäure oder Milchsäure, sowie organische Sulfonsäuren wie Methansulfonsäure, Trifluormethansulfonsäure oder Toluolsulfonsäure. Ebenfalls geeignet sind anorganische Brönstedt-Säuren wie HCl, H₂SO₄ oder HClO₄. Als Lewis-Säure kann zum Beispiel BF₃, BCl₃, SnCl₄, TiCl₄, oder AlCl₃ eingesetzt werden. Auch der Einsatz von komplex gebundenen oder in ionischen Flüssigkeiten gelösten Lewis-Säuren ist möglich. Die Säure wird üblicherweise in einer Menge von 0,1 bis 10 Gew.-%, bevorzugt 0,5 bis 5 Gew.-%, bezogen auf das Monomer, eingesetzt.

Die Polymerisation kann in Substanz oder vorzugsweise in einem inerten Verdünnungsmittel durchgeführt werden. Geeignete Verdünnungsmittel sind beispielsweise halogenierte Kohlenwasserstoff wie Dichlormethan, Trichlormethan, Dichlorethen oder Kohlenwasserstoffe wie Toluol, Xylol oder Hexan und deren Gemische.

Vorzugsweise wird die Polymerisation der Monomere der Formel I in weitgehender Abwesenheit von Wasser durchgeführt, d.h. die Konzentration an Wasser zu Beginn der Polymerisation beträgt weniger als 0,1 Gew.-%. Dementsprechend werden als Monomere der Formel I solche Monomere bevorzugt, die unter Polymerisationsbedingungen kein Wasser abspalten. Hierzu zählen insbesondere die Monomere der Formeln II, IIa, III und IIIa.

Die Polymerisationstemperatur liegt üblicherweise im Bereich von 0 bis 150 °C, insbesondere im Bereich von 20 bis 100 °C.

Der Polymerisation der Monomere der Formel I können sich Reinigungsschritte und gegebenenfalls Trocknungsschritte anschließen.

Der Polymerisation in Schritt i) des erfindungsgemäßen Verfahrens schließt sich eine Calcinierung an. Hierbei wird das bei der Polymerisation der Monomere der Formel I (bzw. der Monomere der Formeln II, IIa, III, IIIa, IV, V, Va, VI und/oder VIa) gebildete organische polymere Material zur Kohlenstoffphase carbonisiert.

In der Regel führt man die Calcinierung bei einer Temperatur im Bereich von 400 bis 1500 °C, insbesondere im Bereich von 500 bis 1100 °C durch.

Die Calcinierung erfolgt dann üblicherweise unter weitgehendem Ausschluss von Sauerstoff. Mit anderen Worten, während der Calcinierung ist der Sauerstoffpartialdruck in der Reaktionszone, in welcher die Calcinierung durchgeführt wird, gering und wird vorzugsweise 20 mbar, insbesondere 10 mbar nicht überschreiten. Vorzugsweise führt man die Calcinierung in einer Inertgas-Atmosphäre durch, z.B. unter Stickstoff oder Argon. Vorzugsweise wird die Inertgasatmosphäre weniger als 1 Vol.-%, insbesondere weniger als 0,1 Vol.-% Sauerstoff enthalten. In einer ebenfalls bevorzugten Ausführungsform der Erfindung führt man die Calcinierung unter reduzierenden Bedingungen durch, z.B. in einer Atmosphäre, welche Wasserstoff (H₂), Kohlenwasserstoffgase wie Methan, Ethan oder Propan, oder Ammoniak (NH₃), gegebenenfalls als Gemisch mit einem Inertgas wie Stickstoff oder Argon, enthält.

Zur Entfernung flüchtiger Bestandteile kann die Calcinierung in einem Inertgasstrom oder in einem Gasstrom, welcher reduzierende Gase wie Wasserstoff, Kohlenwasserstoffgase oder Ammoniak enthält, durchgeführt werden.

Das erfindungsgemäße Material zeichnet sich, wie bereits gesagt, durch besonders vorteilhafte Eigenschaften bei Anwendung in Lithiumionen-Zellen aus, insbesondere durch eine hohe spezifische Kapazität, eine gute Zyklenstabilität, eine geringe Neigung zur Selbstentladung und zur Bildung von Lithiumdendriten sowie durch eine vorteilhafte Kinetik bezüglich des Beladungs-/Entladungsvorgangs, so dass hohe Stromdichten erreicht werden können.

Gegenstand der Erfindung ist daher auch die Verwendung des elektroaktiven Materials in Anoden für Lithiumionen-Zellen, insbesondere Lithiumionen-Sekundärzellen, sowie eine Anode für Lithiumionen-Zellen, insbesondere Lithiumionen-Sekundärzellen, die ein erfindungsgemäßes elektroaktives Material umfasst.

Neben dem erfindungsgemäßen elektroaktiven Material umfasst die Anode in der Regel wenigstens ein geeignetes Bindemittel zur Verfestigung des erfindungsgemäßen elektroaktiven Materials sowie gegebenenfalls weiterer elektrisch leitfähiger oder elektroaktiver Bestandteile. Außerdem weist die Anode in der Regel elektrische Kontakte zur Zu- und Ableitung von Ladungen auf. Die Menge an erfindungsgemäßem elektroaktiven Material, bezogen auf die Gesamtmasse des Anodenmaterial, abzüglich etwaiger Stromsammler und elektrischer Kontakte, beträgt in der Regel wenigstens 40 Gew.-%, häufig wenigstens 50 Gew.-% und speziell wenigstens 60 Gew.-%.

Als weitere elektrisch leitfähige oder elektroaktive Bestandteile in den erfindungsgemäßen Anoden kommen Ruß, Graphit, Kohlenstofffasern, Nanocarbonfasern, Nanocarbonröhren oder elektrisch leitfähige Polymere in Betracht. Typischerweise werden etwa 2,5 bis 40 Gew.-% des leitfähigen Materials zusammen mit 50 bis 97,5 Gew.-%, häufig mit 60 bis 95 Gew.-% des erfindungsgemäßen elektroaktiven Materials in der Anode verwendet, wobei die Angaben in Gewichtsprozent auf die Gesamtmasse des Anodenmaterials, abzüglich etwaiger Stromsammler und elektrischer Kontakte, bezogen sind.

Als Bindemittel für die Herstellung einer Anode unter Verwendung der erfindungsgemäßen elektroaktiven Materialien kommen insbesondere folgende polymeren Materialien in Frage:
Polyethylenoxid (PEO), Cellulose, Carboxymethylcellulose (CMC), Polyethylen, Polypropylen, Polytetrafluorethylen, Polyacrylnitril-Methylmethacrylat, Polytetrafluorethylen, Styrol-Butadien-Copolymere, Tetrafluorethylen-Hexafluorethylen-Copolymere, Polyvinylidendifluorid (PVdF), Polyvinylidendifluorid-Hexafluorpropylen-Copolymere (PVdF-HFP), Tetrafluorethylen-Hexafluorpropylen-Copolymere, Perfluoralkyl-Vinylether-Copolymere, Vinylidenfluorid-Hexafluorpropylen-Copolymere, Ethylen-Tetrafluorethylen-Copolymere, Vinylidenfluorid-Chlortrifluoroethylen-Copolymere, Ethylen-Chlorfluorethylen-Copolymere, Ethylen-Acrylsäure-Copolymere (mit und ohne Einschluss von Natriumionen), Ethylen-Methacrylsäure-Copolymere (mit und ohne Einschluss von Natriumionen), Ethylen-Methacrylsäureester-Copolymere (mit und ohne Einschluss von Natriumionen), Polyimide und Polyisobuten.

Die Auswahl des Bindemittels erfolgt gegebenenfalls unter Berücksichtigung der Eigenschaften des eventuell zur Herstellung verwendeten Lösungsmittels. Das Bindemittel wird in der Regel in einer Menge von 1 bis 10 Gew.-% bezogen auf die Gesamtmischung des Anodenmaterials eingesetzt. Vorzugsweise werden 2 bis 8 Gew.-%, insbesondere 3 bis 7 Gew.-% eingesetzt.

Die Herstellung der Anode kann in an sich üblicher Weise nach Standardverfahren erfolgen, wie sie aus dem eingangs zitierten Stand der Technik sowie aus einschlägigen Monographien bekannt sind. Beispielsweise kann man zur Herstellung der Anode das erfindungsgemäße elektroaktive Material, gegebenenfalls unter Verwendung eines organischen Lösungsmittels (beispielsweise N-Methylpyrrolidinon oder ein Kohlenwasserstoff-Lösungsmittel) mit den gegebenenfalls weiteren Bestandteilen des Anodenmaterials (elektrisch leitfähige Bestandteile und/oder organisches Bindemittel) vermischen und gegebenenfalls einem Formgebungsverfahren unterwerfen oder auf eine inerte Metallfolie, z.B. Cu-Folie, aufbringen. Gegebenenfalls wird anschließend getrocknet. Dabei kommt beispielsweise eine Temperatur von 80 bis 150 °C zum Einsatz. Der Trocknungsprozess kann auch bei vermindertem Druck stattfinden und dauert in der Regel 3 bis 48 Stunden. Gegebenenfalls kann man zur Formgebung auch ein Schmelz- oder Sinterverfahren anwenden.

Gegenstand der vorliegenden Erfindung sind außerdem Lithiumionen-Zellen, insbesondere eine Lithiumionen-Sekundärzellen, die wenigstens eine Anode aufweisen, welche ein erfindungsgemäßes elektroaktives Material enthält.

Derartige Zellen weisen in der Regel wenigstens eine erfindungsgemäße Anode, eine für Lithiumionen-Zellen geeignete Kathode, einen Elektrolyten und gegebenenfalls einen Separator auf.

Bezüglich geeigneter Kathodenmaterialien, geeigneter Elektrolyte, geeigneter Separatoren und möglicher Anordnungen wird auf den einschlägigen Stand der Technik verwiesen, z.B. auf den eingangs zitierten Stand der Technik sowie auf entsprechende Monographien und Nachschlagewerke: z.B. Wakihara et al. (Herausgeber) in Lithiumion Batteries, 1. Auflage, Wiley VCH, Weinheim, 1998; David Linden: Handbook of Batteries (McGraw-Hill Handbooks). 3. Auflage. Mcgraw-Hill Professional, New York 2008; J. O. Besenhard: Handbook of Battery Materials. Wiley-VCH, 1998.

Als Kathoden kommen insbesondere solche Kathoden in Betracht, bei denen das Kathodenmaterial Lithium-Übergangsmetalloxid, z. B. Lithium-Cobaltoxid, Lithium-Nickeloxid, Lithium-Cobalt-Nickel-Oxid, Lithium-Manganoxid (Spinell), Lithium-Nickel-Cobalt-Aluminiumoxid, Lithium-Nickel-Cobalt-Manganoxid oder Lithium-Vanadiumoxid, oder ein Lithium-Übergangsmetallphosphat wie Lithium-Eisenphosphat enthält.

Die beiden Elektroden, d.h. die Anode und die Kathode, werden unter Verwendung eines flüssigen oder auch festen Elektrolyts miteinander verbunden. Als flüssige Elektrolyte kommen insbesondere nicht-wässrige Lösungen (Wassergehalt in der Regel < 20 ppm) von Lithiumsalzen und geschmolzene Li-Salze in Frage, z.B. Lösungen von Lithiumhexafluorophosphat, Lithiumperchlorat, Lithiumhexafluoroarsenat, Lithiumtrifluormethylsulfonat, Lithium(bis(trifluormethylsulfonyl)imid) oder Lithiumtetrafluoroborat, insbsondere Lithiumhexafluorophosphat oder Lithiumtetrafluoroborat, in geeigneten aprotischen Lösungsmitteln wie beispielsweise Ethylencarbonat, Propylencarbonat und deren Gemische mit einem oder mehreren der folgenden Lösungsmittel: Dimethylcarbonat, Diethylcarbonat, Dimethoxyethan, Methylpropionat, Ethylpropionat, Butyrolacton, Acetonitril, Ethylacetat, Methylacetat, Toluol und Xylol, speziell in einem Gemisch aus Ethylencarbonat und Diethylcarbonat. Als feste Elektrolyte können beispielsweise ionisch leitende Polymere verwendet werden.

Zwischen den Elektroden kann ein Separator angeordnet sein, der mit dem flüssigen Elektrolyten getränkt ist. Beispiele für Separatoren sind insbesondere Glasfaservliese sowie poröse organische Polymerfilme wie poröse Filme aus Polyethylen, Polypropylen, PVdF etc.

Diese können zum Beispiel eine prismatische Dünnfilm-Struktur aufweisen, in welcher ein fester Dünnfilm-Elektrolyt zwischen einem Film, der eine Anode darstellt, und einem Film, der eine Kathode darstellt, angeordnet ist. Ein zentraler Kathodenstromabnehmer ist zwischen jedem der Kathodenfilme angeordnet, um eine doppelflächige Zellenkonfiguration zu bilden. In einer anderen Ausführungsform kann eine einflächige Zellenkonfiguration eingesetzt werden, bei welcher ein einzelner Kathodenstromabnehmer einer einzelnen Anode/Separator/Kathode-Elementkombination zugeordnet ist. In dieser Konfiguration ist ein Isolierfilm typischerweise zwischen einzelnen Anode/-Separator/Kathode/Stromabnehmer-Elementkombinationen angeordnet.

Die folgenden Figuren und Beispiele dienen der Erläuterung der Erfindung und sind nicht einschränkend zu verstehen.

Die TEM-Untersuchungen wurden HAADF-STEM mit einem Transmissionselektronenmikroskop Tecnai F20 (FEI, Eindhoven, NL) bei einer Arbeitsspannung von 200 kV in Ultradünnschichttechnik (Einbettung der Proben in Kunstharz als Matrix) durchgeführt.

Die ESCA-Untersuchungen wurden mit einem Röntgenphotoelektronenspektrometer FEI 5500 LS der Fa. FEI (Eindhoven, NL) durchgeführt.

Die Untersuchungen zur Röntgenkleinwinkelstreuung erfolgten bei 20 °C in Spaltkollimation unter Einsatz von mit Göbelspiegeln monochromatisierter Cu_{Kα}-Strahlung. Die Daten wurden gegen den Hintergrund korrigiert und bezüglich der durch die Spaltkollimation bedingten Verschmierung entschmiert.
- Figur 1:: HAADF-STEM-Untersuchung der Probe aus Beispiel 1 mit einer Vergrößerung von 10⁶.
- Figur 2:: Ergebnis der SWAXS-Untersuchung (Transmission der Proben aus Beispiel 1 (Spalte D) und 2 (Spalte B), dargestellt als Streuintensität in Abhängigkeit vom Streuvektor q, nach Korrektur und Entschmierung.
- Figur 3:: Darstellung der Kapazität des Elektrodenmaterials aus Beispiel 1 in Abhängigkeit von der Zyklenzahl.

### Herstellungsbeispiel 1: 2,2'-Spirobis[4H-1,3,2-benzodioxasilin]

135,77 g Salicylalkohol (1,0937 mol) wurden in Toluol bei 85 °C gelöst. Anschließend wurden 83,24g (0,5469 mol) Tetramethoxysilan (TMOS) langsam zugetropft, wobei nach Zugabe eines Drittels an TMOS 0,3 mL Tetra-n-butylammoniumfluorid (1 M in THF) auf einmal eingespritzt wurde. Man rührte 1 h bei 85 °C und destillierte anschließend das Azeotrop Methanol/Touluol (63,7 °C) ab. Das restliche Toluol wurde am Rotationsverdampfer entfernt. Das Produkt wurde aus dem erhaltenen Reaktionsgemisch mit Hexan bei ≈ 70 °C herausgelöst. Nach Abkühlen auf 20 °C dekantierte man die klare Lösung ab. Nach Entfernung des Hexans blieb die Titelverbindung als weißer Feststoff zurück. Das Produkt kann durch Umfällen mit Hexan weiter von Verunreinigungen gereinigt werden.
¹H-NMR 400 MHz, CDCl₃, 25°C, TMS) δ [ppm] = 5.21 (m, 4H,CH₂), 6.97-7.05 (m, 6H), 7.21-7.27 (M, 2H).
¹³C-NMR (100 MHz, CDCl₃, 25 °C): δ [ppm] = 66.3 (CH₂), 119.3, 122.3, 125.2, 125.7, 129.1, 152.4.
²⁹Si-CP-MAS (79.5 MHz): δ [ppm] = - 78.4

### Beispiel 1: Herstellung des elektroaktiven Materials

1) 65 g 2,2'-Spirobi[4H-1,3,2-benzodioxasilin] wurden in 500 ml Trichlormethan gelöst. Das Reaktionsgefäß wurde mit Stickstoff inertisiert und die Polymerisation wurde durch Zugabe von 5 g Methansulfonsäure bei 23 °C gestartet. Man ließ die Reaktionsmischung noch eine Stunde bei 23 °C nachreagieren und filtrierte das Polymer ab. Das so erhaltene Polymer wurde im Vakuum-Trockenofen bei 50 °C bis zur Gewichtskonstanz getrocknet.
2) Das in Schritt 1 erhaltene Pulver wurde anschließend in einem Röhrenofen im Stickstoffstrom 2 h bei 600 °C calciniert. Auf diese Weise erhielt man ein schwarzes Pulver.

Das Pulver wies laut Elementaranalyse einen Kohlenstoffgehalt von 56,1 Gew.-% und einen Siliziumgehalt von 15,4 Gew.-% auf.

Laut ESCA lag das Silizium im Wesentlichen als Siliziumdioxid (Signal bei 103,3 eV) vor. Der Kohlenstoff lag im Wesentlichen als Graphit vor (asymmetrisches Signal bei 284,5 eV).

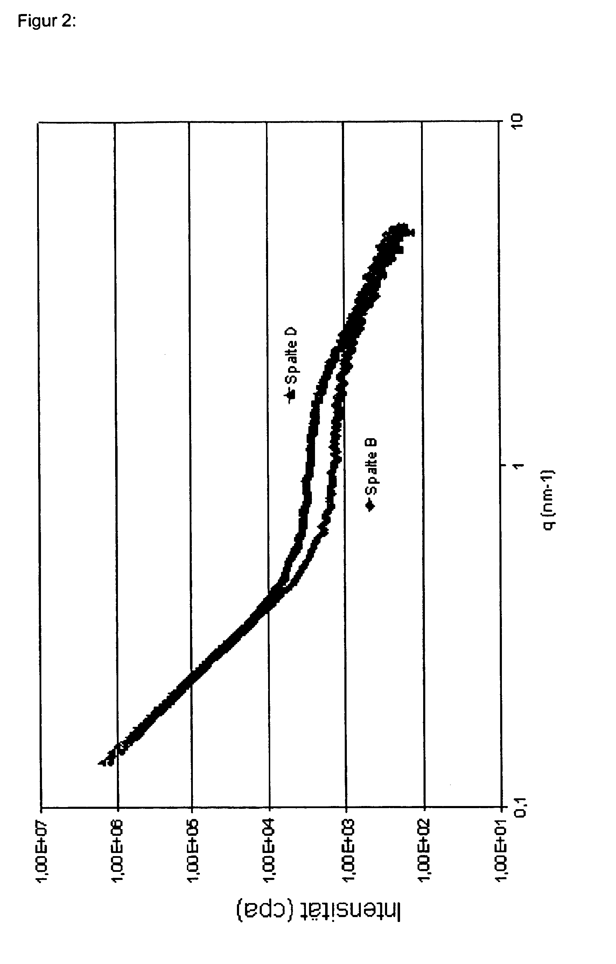

Laut SWAXS betrug der mittlere Abstand der Phasen weniger als 1 nm (siehe Abbildung 2).

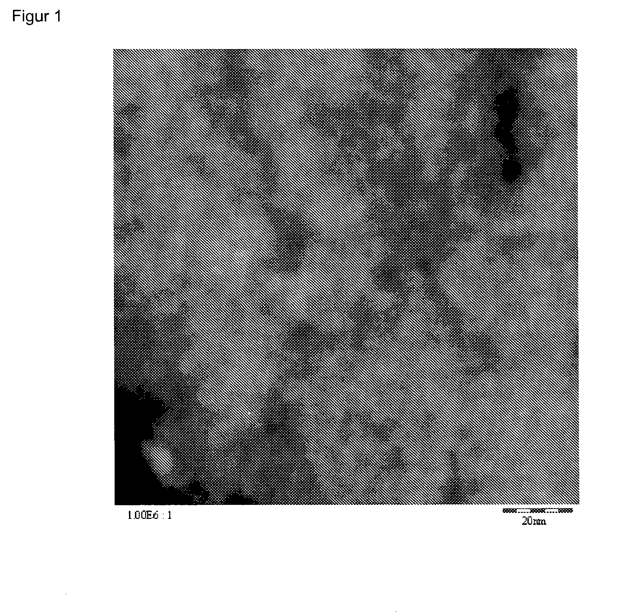

In der TEM-Aufnahme (Abbildung 1) sind die homogen dispergierten Bereiche der SiOₓ-Domänen zu erkennen. Die Größe dieser Domänen liegt im Bereich von 0,2 - 5 nm.

### Beispiel 2: Herstellung des elektroaktiven Materials

Das in Schritt 1 erhaltene Pulver wurde anschließend in einem Röhrenofen im Stickstoffstrom 2 h bei 800 °C calciniert. Auf diese Weise erhielt man ein schwarzes Pulver.

Das Pulver wies laut Elementaranalyse einen Kohlenstoffgehalt von 55,9 Gew.-% und einen Siliziumgehalt von 16,6 Gew.-% auf.

Laut ESCA lag das Silizium im Wesentlichen als Siliziumdioxid vor. Der Kohlenstoff lag im Wesentlichen als Graphit vor.

Laut SWAXS betrug der mittlere Abstand der Phasen weniger als 1 nm.

### Beispiel 3: Herstellung des elektroaktiven Materials

Das in Schritt 1 erhaltene Pulver wurde anschließend in einem Röhrenofen im Argonstrom 2 h bei 1000 °C calciniert. Auf diese Weise erhielt man ein schwarzes Pulver.

Das Pulver wies laut Elementaranalyse einen Kohlenstoffgehalt von 60,5 Gew.-% und einen Siliziumgehalt von 16,3 Gew.-% auf.

### Beispiel 4: Herstellung des elektroaktiven Materials

Das in Schritt 1 erhaltene Pulver wurde anschließend in einem Röhrenofen im Wasserstoffstrom 2 h bei 1000 °C calciniert. Auf diese Weise erhielt man ein schwarzes Pulver.

Das Pulver wies laut Elementaranalyse einen Kohlenstoffgehalt von 60,8 Gew.-% und einen Siliziumgehalt von 15,7 Gew.-% auf.

### Beispiel 5: Herstellung einer Anode

Zur Präparation einer Anode wurden 5 g des im Beispiel 1 hergestellten Pulvers mit 5 g Ruß (Super P®, Fa. Timcal AG, 6743 Bodio, Schweiz), 16,4 g Acetonitril und 0,3 g eines handelsüblichen Copolymers PVdF-HFP 30 Sekunden mit einem Intensivrührer (Ultra-Turrax® T25 basic, Fa. IKA Labortechnik, D-79219 Staufen) vermischt.

Die erhaltene schwarze Suspension wurde auf einer Rollmaschine in einem geschlossenen Glasbehälter entgast und anschließend auf eine Aluminiumfolie mit einer Schichtdicke von 250 µm aufgerakelt. Nach 1-stündiger Trocknung bei 80 °C im Vakuumtrockenschrank betrug die aufgetragene Schichtdicke 80 µm. Aus dem resultierenden Anodenmaterial wurden Elektroden mit einem Durchmesser von 13 mm ausgestanzt und in einer Glove-Box unter Argon (Gehalt an Sauerstoff und Wasserdampf jeweils < 1 ppm) in Zellen für die elektrochemische Charakterisierung eingebaut.

Als Kathode wurden aus einer 750 µm dicken Li-Folie (Fa. Sigma-Aldrich Chemie GmbH, CH-9571 Buchs SG, Schweiz) ausgestanzte metallische Lithium-Scheibchen verwendet.

Ein Glasfaser-Vlies mit einer Dicke von ca. 1 mm wurde als Separator und eine Mischung aus Dimethylcarbonat und Ethylencarbonat im Verhältnis 1 : 1 mit einem Gehalt an 1 mol/l Lithiumhexafluorophosphat LiPF6 (Hersteller: Ferro Corp., Cleveland, USA) wurde als Elektrolytlösung eingesetzt.

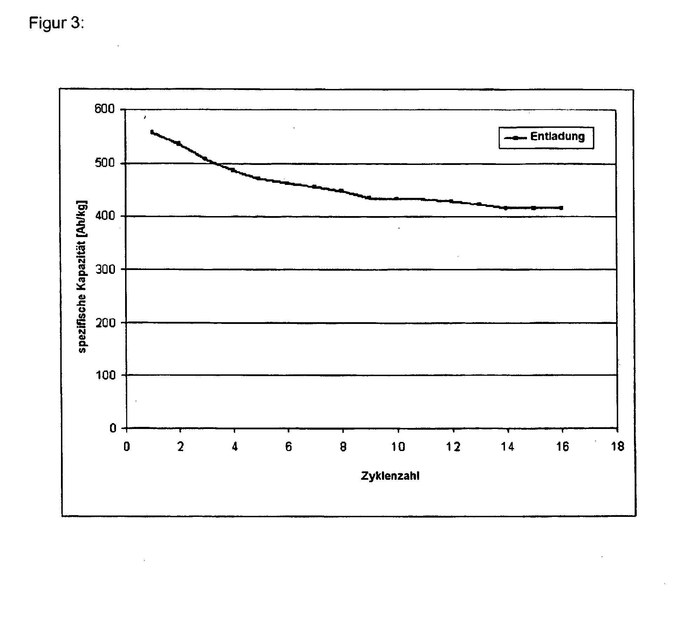

Zur Testung der Stabilität wird die Zelle zur elektrochemischen Charakterisierung in einen Messplatz eingebaut und mit den folgenden Parametern zyklisiert: Entladung mit 10 mA/g; Zellspannung zyklisierend von 0 bis 2,0 V. Die Kapazität in Abhängigkeit von der Zyklenzahl ist in Abb. 3 dargestellt.

## Patentansprüche

1. Elektroaktives Material, umfassend:
a) eine Kohlenstoffphase C;
b) wenigstens eine MOₓ-Phase, worin M für ein Metall oder Halbmetall steht, das ausgewählt ist unter B, Al, Si, Ti, Zr, Sn, Sb und deren Mischungen, x für eine Zahl von 0 bis ≤ k/2 steht, wobei k die maximale Wertigkeit des Metalls oder Halbmetalls bedeutet;
wobei die Kohlenstoffphase C und die MOₓ-Phase im Wesentlichen co-kontinuierliche Phasendomänen bilden, wobei der mittlere Abstand zweier benachbarter Domänen identischer Phasen maximal 10 nm beträgt.

2. Elektroaktives Material nach einem der vorhergehenden Ansprüche, wobei M zu wenigstens 90 mol-%, bezogen auf die Gesamtmenge an M, für Si steht.

3. Elektroaktives Material nach einem der vorhergehenden Ansprüche, wobei x für einen Wert im Bereich von 0 bis 2 steht.

4. Elektroaktives Material nach einem der vorhergehenden Ansprüche, wobei die Kohlenstoffphase C ein Molverhältnis von Wasserstoff zu Kohlenstoff von maximal 0,5 aufweist.

5. Elektroaktives Material nach einem der vorhergehenden Ansprüche, wobei das Molverhältnis von Halbmetall oder Metall M zu Kohlenstoffphase C im Bereich von 1:30 bis 1:1 liegt.

6. Elektroaktives Material nach einem der vorhergehenden Ansprüche, wobei die Bereiche, in denen die Kohlenstoffphase und die MOx-Phase im Wesentlichen co-kontinuierliche Phasendomänen bilden, wenigstens 80 % des elektroaktiven Materials ausmacht.

7. Elektroaktives Material nach einem der vorhergehenden Ansprüche, erhältlich durch ein die folgenden Schritte umfassendes Verfahren:
i) Polymerisation wenigstens eines Monomers der Formel I in einem nicht-wässrigen Polymerisationsmedium 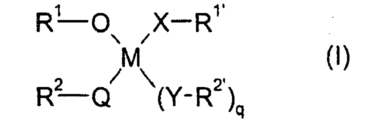 worin
M für ein Metall oder Halbmetall steht, das ausgewählt ist unter B, Al, Si, Ti, Zr, Sn, Sb und deren Mischungen;
R¹, R² gleich oder verschieden sein können und für einen Rest Ar-C(R^{a},R^{b})- stehen, worin Ar für einen aromatischen oder heteroaromatischen Ring steht, der gegebenenfalls 1 oder 2 Substituenten aufweist, die unter Halogen, CN, C₁-C₆-Alkyl, C₁-C₆-Alkoxy und Phenyl ausgewählt sind und R^{a}, R^{b} unabhängig voneinander für Wasserstoff oder Methyl stehen oder gemeinsam ein Sauerstoffatom oder eine Methylidengruppe (=CH₂) bedeuten,
oder die Reste R¹O und R²Q für einen Rest der Formel A 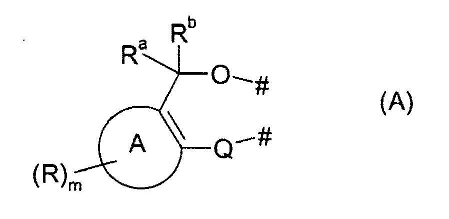 steht, worin A für einen an die Doppelbindung kondensierten aromatischen oder heteroaromatischen Ring steht, m für 0, 1 oder 2 steht, die Reste R gleich oder verschieden sein können und unter Halogen, CN, C₁-C₆-Alkyl, C₁-C₆-Alkoxy und Phenyl ausgewählt sind und R^{a}, R^{b} die zuvor genannten Bedeutungen aufweisen;
Q für O, S oder NH steht;
q entsprechend der Wertigkeit von M für 0, 1 oder 2 steht,
X, Y gleich oder verschieden sein können und für O, S, NH oder eine chemische Bindung stehen;
R^{1'}, R^{2'} gleich oder verschieden sein können und für C₁-C₆-Alkyl, C₃-C₆-Cycloalkyl, Aryl oder einen Rest Ar'-C(R^{a'},R^{b'})- stehen, worin Ar' die für Ar angegebenen Bedeutungen hat und R^{a'}, R^{b'} die für R^{a}, R^{b} angegebenen Bedeutungen aufweisen oder R^{1'}, R^{2'} gemeinsam mit X und Y für einen Rest der Formel A, wie zuvor definiert, stehen.
und
ii) Calcinieren des dabei erhaltenen Polymers unter weitgehendem oder vollständigem Ausschluss von Sauerstoff.

8. Elektroaktives Material nach Anspruch 7, wobei das Monomer der Formel I wenigstens ein Monomer der Formel II umfasst: 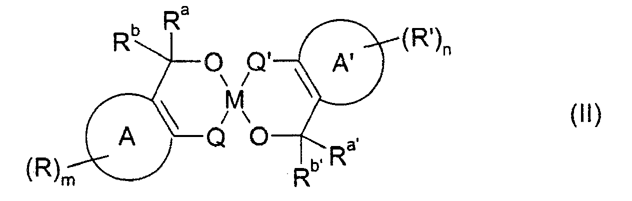 worin
M für ein Metall oder Halbmetall steht, das ausgewählt ist unter B, Al, Si, Ti, Zr, Sn, Sb und deren Mischungen;
A und A' für einen an die Doppelbindung kondensierten aromatischen oder heteroaromatischen Ring steht;
m und n unabhängig voneinander für 0, 1 oder 2 stehen;
Q und Q' gleich oder verschieden sind und unabhängig voneinander für O, S oder NH stehen;
R und R' gleich oder verschieden sind und unabhängig voneinander unter Halogen, CN, C₁-C₆-Alkyl, C₁-C₆-Alkoxy und Phenyl ausgewählt sind; und
R^{a}, R^{b}, R^{a'}, R^{b'} unabhängig voneinander ausgewählt sind unter Wasserstoff und Methyl oder R^{a} und R^{b} und/oder R^{a'} und R^{b'} jeweils gemeinsam für ein Sauerstoffatom stehen.

9. Elektroaktives Material nach Anspruch 7 oder 8, wobei man das Calcinieren bei einer Temperatur im Bereich von 400 bis 1500 °C in einer im Wesentlichen sauerstofffreien Atmosphäre durchführt.

10. Verfahren zur Herstellung eines elektroaktiven Materials, umfassend die folgenden Schritte:
i) Polymerisation wenigstens eines Monomers der Formel I, wie in Anspruch 7 definiert, in einem nicht-wässrigen Polymerisationsmedium und
ii) Calcinieren des dabei erhaltenen Polymers unter weitgehendem oder vollständigem Ausschluss von Sauerstoff.

11. Verfahren nach Anspruch 10, wobei das Monomer der Formel wenigstens ein Monomer der Formel II, wie in Anspruch 8 definiert, umfasst.

12. Verfahren nach Anspruch 10 oder 11, wobei man das Calcinieren bei einer Temperatur im Bereich von 400 bis 1500 °C in einer im Wesentlichen sauerstofffreien Atmosphäre durchführt.

13. Verwendung des elektroaktiven Materials nach einem der Ansprüche 1 bis 9 in einer Anode für Lithiumionen-Zellen, insbesondere Lithiumionen-Sekundärzellen.

14. Anode für Lithiumionen-Zellen, umfassend wenigstens ein elektroaktives Material nach einem der Ansprüche 1 bis 9.

15. Lithiumionen-Zelle, umfassend wenigstens eine Anode gemäß Anspruch 14.

## Claims

1. An electroactive material comprising:
a) a carbon phase C;
b) at least one MOₓ phase, where M is a metal or semimetal which is selected from among B, Al, Si, Ti, Zr, Sn, Sb and mixtures thereof, x is from 0 to ≤k/2, where k is the maximum valence of the metal or semimetal;
wherein the carbon phase C and the MOₓ phase form essentially co-continuous phase domains, with the average distance between two neighboring domains of identical phases being not more than 10 nm.

2. The electroactive material according to any of the preceding claims, wherein at least 90 mol% of M, based on the total amount of M, is Si.

3. The electroactive material according to either of the preceding claims, wherein x is in the range from 0 to 2.

4. The electroactive material according to any of the preceding claims, wherein the carbon phase C has a molar ratio of hydrogen to carbon of not more than 0.5.

5. The electroactive material according to any of the preceding claims, wherein the molar ratio of semimetal or metal M to carbon phase C is in the range from 1:30 to 1:1.

6. The electroactive material according to any of the preceding claims, wherein the regions in which the carbon phase and the MOₓ phase form essentially co-continuous phase domains make up at least 80% of the electroactive material.

7. The electroactive material according to any of the preceding claims which can be obtained by a process comprising the following steps:
i) polymerization of at least one monomer of the formula I in a nonaqueous polymerization medium 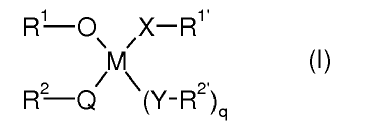 where
M is a metal or semimetal which is selected from among B, Al, Si, Ti, Zr, Sn, Sb and mixtures thereof;
R¹, R² can be identical or different and are each a radical
Ar-C(R^{a},R^{b})-, where Ar is an aromatic or heteroaromatic ring which optionally has one or two substituents selected from among halogen, CN, C₁-C₆-alkyl, C₁-C₆-alkoxy and phenyl and R^{a}, R^{b} are each, independently of one another, hydrogen or methyl or together represent an oxygen atom or a methylidene group (=CH₂),
or the radicals R¹O and R²Q form a radical of the formula A 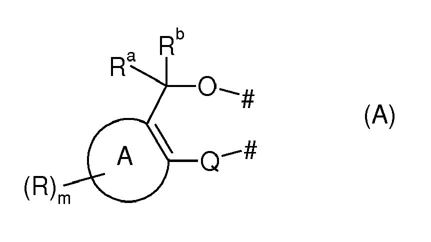 where A is an aromatic or heteroaromatic ring fused to the double bond, m is 0, 1 or 2, the radicals R can be identical or different and are selected from among halogen, CN, C₁-C₆-alkyl, C₁-C₆-alkoxy and phenyl and R^{a}, R^{b} are as defined above;
Q is 0, S or NH;
q is 0, 1 or 2 corresponding to the valence of M,
X, Y can be identical or different and are each 0, S, NH or a chemical bond;
R^{1'}, R^{2'} can be identical or different and are each C₁-C₆-alkyl, C₃-C₆-cycloalkyl, aryl or a radical Ar'-C(R^{a'},R^{b'})-, where Ar' has the meanings given for Ar and R^{a'}, R^{b'} have the meanings given for R^{a}, R^{b} or R^{1'}, R^{2'} together with X and Y form a radical of the formula A as defined above,
and
ii) calcination of the resulting polymer with substantial or complete exclusion of oxygen.

8. The electroactive material according to claim 7, wherein the monomer of the formula I comprises at least one monomer of the formula II: 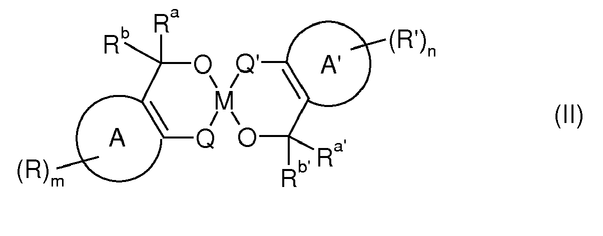 where
M is a metal or semimetal which is selected from among B, Al, Si, Ti, Zr, Sn, Sb and mixtures thereof;
A and A' are each an aromatic or heteroaromatic ring fused to the double bond;
m and n are each, independently of one another, 0, 1 or 2;
Q and Q' are identical or different and are each, independently of one another, 0, S or NH;
R and R' are identical or different and are selected independently from among halogen, CN, C₁-C₆-alkyl, C₁-C₆-alkoxy and phenyl; and
R^{a}, R^{b}, R^{a'}, R^{b'} are selected independently from among hydrogen and methyl or R^{a} and R^{b} and/or R^{a'} and R^{b'} in each case together represent an oxygen atom.

9. The electroactive material according to claim 7 or 8, wherein the calcination is carried out at a temperature in the range from 400 to 1500°C in an essentially oxygen-free atmosphere.

10. A process for producing an electroactive material, which comprises the following steps:
i) polymerization of at least one monomer of the formula I as defined in claim 7 in a nonaqueous polymerization medium and
ii) calcination of the resulting polymer with substantial or complete exclusion of oxygen.

11. The process according to claim 10, wherein the monomer of the formula I comprises at least one monomer of the formula II as defined in claim 8.

12. The process according to claim 10 or 11, wherein the calcination is carried out at a temperature in the range from 400 to 1500°C in an essentially oxygen-free atmosphere.

13. The use of the electroactive material according to any of claims 1 to 9 in an anode for lithium ion cells, in particular lithium ion secondary cells.

14. An anode for lithium ion cells, which comprises at least one electroactive material according to any of claims 1 to 9.

15. A lithium ion cell comprising at least one anode according to claim 14.

## Revendications

1. Matériau électroattracteur, comprenant :
a) une phase carbonée C ;
b) au moins une phase MOₓ, dans laquelle M représente un métal ou un semi-métal, qui est choisi parmi B, Al, Si, Ti, Zr, Sn, Sb et leurs mélanges, x représente un nombre de 0 à ≤ k/2, k signifiant la valence maximale du métal ou du semi-métal ;
la phase carbonée C et la phase de MOₓ formant sensiblement des domaines de phases co-continues, la distance moyenne de deux domaines adjacents de phases identiques étant d'au maximum 10 nm.

2. Matériau électroattracteur selon l'une quelconque des revendications précédentes, M représentant Si à raison d'au moins 90% en mole, par rapport à la quantité totale de M.

3. Matériau électroattracteur selon l'une quelconque des revendications précédentes, x représentant une valeur dans la plage de 0 à 2.

4. Matériau électroattracteur selon l'une quelconque des revendications précédentes, la phase carbonée C présentant un rapport molaire d'hydrogène à carbone d'au maximum 0,5.

5. Matériau électroattracteur selon l'une quelconque des revendications précédentes, le rapport molaire de semi-métal ou de métal M à la phase carbonée C se situant dans la plage de 1:30 à 1:1.

6. Matériau électroattracteur selon l'une quelconque des revendications, les plages dans lesquelles la phase carbonée et la phase MOₓ forment sensiblement des domaines de phases co-continues représentant au moins 80% du matériau électroattracteur.

7. Matériau électroattracteur selon l'une quelconque des revendications précédentes, pouvant être obtenu par un procédé comprenant les étapes suivantes :
i) polymérisation d'au moins un monomère de formule I dans un milieu de polymérisation non aqueux 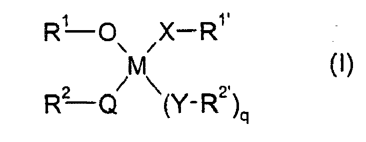 où
M représente un métal ou un semi-métal, qui est choisi parmi B, Al, Si, Ti, Zr, Sn, Sb et leurs mélanges ;
R¹, R² peuvent être identiques ou différents et représentent un radical Ar-C(R^{a},R^{b})-, dans lequel Ar représente un cycle aromatique ou hétéroaromatique, qui présente le cas échéant 1 ou 2 substituants qui sont choisis parmi halogène, CN, C₁-C₆-alkyle, C₁-C₆-alcoxy et phényle et R^{a}, R^{b} représentent, indépendamment l'un de l'autre, hydrogène ou méthyle ou signifient ensemble un atome d'oxygène ou un groupe méthylidène (=CH₂),
ou les radicaux R¹O et R²Q représentent un radical de formule A 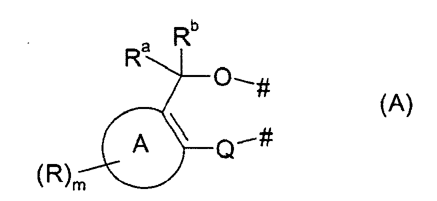 dans laquelle A représente un cycle aromatique ou hétéroaromatique condensé sur la double liaison, m vaut 0, 1 ou 2, les radicaux R peuvent être identiques ou différents et sont choisis parmi halogène, CN, C₁-C₆-alkyle, C₁-C₆-alcoxy et phényle et R^{a}, R^{b} présentent les significations susmentionnées ;
Q représente 0, S ou NH ;
q représente, selon la valence de M, 0, 1 ou 2,
X, Y peuvent être identiques ou différents et représentent 0, S, NH ou une liaison chimique ;
R^{1'}, R^{2'} peuvent être identiques ou différents et représentent C₁-C₆-alkyle, C₃-C₆-cycloalkyle, aryle ou un radical Ar'-C(R^{a'},R^{b'})-, dans lequel Ar' présente les significations indiquées pour Ar et R^{a'}, R^{b'} présentent les significations indiquées pour R^{a}, R^{b} ou R^{1'}, R^{2'} représentent, ensemble avec X et Y, un radical de la formule A, tel que défini ci-dessus
et
ii) calcination du polymère ainsi obtenu sous une exclusion, large ou complète, d'oxygène.

8. Matériau électroattracteur selon la revendication 7, le monomère de formule I présentant au moins un monomère de formule II : 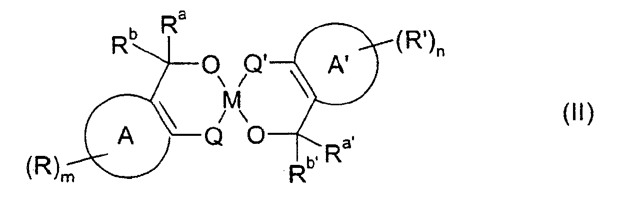 où
M représente un métal ou un semi-métal, qui est choisi parmi B, Al, Si, Ti, Zr, Sn, Sb et leurs mélanges ;
A et A' représentent un cycle aromatique ou hétéroaromatique condensé sur la double liaison ;
m et n valent, indépendamment l'un de l'autre, 0, 1 ou 2 ;
Q et Q' sont identiques ou différents et représentent, indépendamment l'un de l'autre, 0, S ou NH ;
R et R' sont identiques ou différents et sont choisis, indépendamment l'un de l'autre, parmi halogène, CN, C₁-C₆-alkyle, C₁-C₆-alcoxy et phényle ; et
R^{a}, R^{b}, R^{a'}, R^{b'} sont choisis indépendamment les uns des autres parmi hydrogène et méthyle ou R^{a} et R^{b} et/ou R^{a'} et R^{b'} représentent à chaque fois ensemble un atome d'oxygène.

9. Matériau électroattracteur selon la revendication 7 ou 8, la calcination étant réalisée à une température dans la plage de 400 à 1500°C dans une atmosphère essentiellement exempte d'oxygène.

10. Procédé pour la préparation d'un matériau électroattracteur, comprenant les étapes suivantes :
i) polymérisation d'au moins un monomère de formule I, tel que défini dans la revendication 7, dans un milieu de polymérisation non aqueux et
ii) calcination du polymère ainsi obtenu sous une exclusion, large ou complète, d'oxygène.

11. Procédé selon la revendication 10, le monomère de formule I comprenant au moins un monomère de formule II, tel que défini dans la revendication 8.

12. Procédé selon la revendication 10 ou 11, la calcination étant réalisée à une température dans la plage de 400 à 1500°C dans une atmosphère essentiellement exempte d'oxygène.

13. Utilisation d'un matériau électroattracteur selon l'une quelconque des revendications 1 à 9 dans une anode pour cellules à lithium-ion, en particulier pour cellules à lithium-ion secondaires.

14. Anode pour cellules à lithium-ion, comprenant au moins un matériau électroattracteur selon l'une quelconque des revendications 1 à 9.

15. Cellule à lithium-ion comprenant au moins une anode selon la revendication 14.
